# EUROPEAN PATENT APPLICATION

(11) **EP 1 314 749 A2**
(43) Date of publication of application: **28.05.2003**
(21) Application number: 03002296.6
(22) Date of filing: 26.12.1997
(51) Int. Cl.: C08G 63/91, C08L 67/00, C08G 18/42

(54) **Polyester elastomers, processes for preparing the same, and compositions of the same**

(30) Priority: 30.12.1996 JP 35793696; 30.12.1996 JP 35793796; 30.12.1996 JP 35793896; 19.02.1997 JP 5097797; 21.02.1997 JP 5417897; 26.02.1997 JP 5837497; 26.02.1997 JP 5837497
(62) Divisional of application: 97950429.7
(71) Applicant: Daicel Chemical Industries, Ltd., Sakai-shi, Osaka-fu (JP)
(72) Inventor: Watanabe, Kazushi, Arai-shi, Niigata-ken (JP); Watanabe, Jun, Ohtake-shi, Hiroshima-ken (JP); Shimada, Takashi, Iwakuni-shi, Yamaguchi-ken (JP)
(74) Representative: Portal, Gérard

(57) **Abstract**

First aspect of the invention provides a novel polyester elastomer having a high melting point, which comprises a crystalline aromatic polyester which is a hard component, at least one kind selected from an aliphatic polyester, a polyether, and a polycarbonate which are a soft component, and a compound containing isocyanate groups, and which can be obtained in a short preparation time of period. Second aspect of the invention provides a novel polyester elastomer having a high melting point, which is obtained by allowing to react an epoxy group-containing compound which contains at least one of an epoxy compound having at least two epoxy groups in the molecule in place of the compound containing isocyanate groups in the first aspect of the invention, and which can be obtained in a short preparation time of period. Third aspect of the invention provides a polyester elastomer having a hard segment which comprises a polyalkylene naphthalate and an aliphatic polyester having a specified average block chain length, and a process for the preparation thereof, and which is excellent in a heat resistance, oil resistance, abrasion resistance, impact resistance, and hydrolysis resistance, and which is preferably employed as parts for cars, large-sized machines, industrial machines, and home electric appliances. Fourth aspect of the invention provides a process for the preparation of a polyester elastomer which comprises an aromatic polyester resin, an aliphatic polyester resin which have a specified molecular weight, and a dibasic acid (C) or an anhydride thereof, and which is excellent in a heat resistance and rigidity. Fifth aspect of the invention provides a polyester elastomer composition which comprises mixing a polyester elastomer with a specified amount of an epoxy-modified polymer, and which is excellent in a heat resistance, oil resistance, abrasion resistance, impact resistance, and hydrolysis resistance. Sixth aspect of the invention provides a molded article which includes, for example, fibers, films, sheets, bottles, and sheet-molded articles, which comprises an aromatic polyester resin which is a hard segment primarily containing a polyethylene terephthalate or a polyethylene terenaphthalate and at least one kind of a resin which is a soft segment selected from the group consisting of an aliphatic polyester, polycarbonate, and polyether. Seventh aspect of the invention provides an aliphatic polyester elastomer which comprises an aliphatic polyester in which a hard segment and a soft segment which construct a polyester elastomer are different from each other, and which is excellent in a moldability, ductility, impact resistance, and hydrolysis resistance, and which has a low melting point.

## Description

### TECHNICAL FIELD OF FIRST ASPECT OF THE INVENTION

First aspect of the invention relates to a novel polyester elastomer. In more detail, it relates to a polyester elastomer composed of a crystalline aromatic polyester which is a hard component, at least one selected from an aliphatic polyester, a polyether, and a polycarbonate which are a soft component, and a compound containing isocyanate groups.

### BACKGROUND ART OF FIRST ASPECT OF THE INVENTION

There has been known a polyester elastomer containing a crystalline aromatic polyester which is a hard component since a long time ago, and it is disclosed in, for example, US Patents 2623031 and 3446778, etc. In a method of the US Patent 2623031, a aliphatic polyester and an aromatic polyester are mixed in a melted state, and there are problems that a long time of period is required in a reaction in order to obtain an elastomer from the both polyesters which are poor in compatibility each other, and a polymer obtained does not have physical properties such as a sufficient extension ratio.

In the US Patent No. 3446778, there is improved a compatibility with a crystalline aromatic polyester by copolymerizing a slight amount of an aromatic acid with a noncrystalline aliphatic polyester, followed by being combined using an N-acylpolylactam or an N-acylpolyamide. However, raw materials to be employed in the method are very expensive, and those become a cause of a change for the worse in a color hue of a polymer.

In JP-B-73004115, JP-B-73004116, and JP-B-77049037, there are reported a method in which an aromatic polyester is allowed to react with lactones, and a method in which a multifunctional acylating agent is allowed to react. However, in the methods, particularly, the method of the JP-B-77049037 in which a solid-phase polymerization is carried out, a long time of period is required in a polymerization reaction of the lactones, and in the methods of JP-B-73004115 and JP-B-73004116, there are problems that a melting point lowers in the polymer obtained, and residual components of the lactones must be removed. Further, in the methods of the US Patent 2623031 and JP-B-73004116, there is required an aromatic polyester having a higher molecular weight in order to obtain a high molecular weight polymer having sufficient mechanical properties. However, the aromatic polyester having a higher molecular weight unpreferably requires a higher cost for the preparation.

In order to avoid the higher cost, JP-B-73004115, JP-B-85004518, JP-B-91077826, and JP-B-88031491 report methods in which a polyester elastomer having a relatively lower molecular weight is highly-polymerized by a variety of chain extenders.
However, in the methods, since a chain is extended in the polyester elastomer obtained by the above-mentioned methods, there are not solved the problems such as a too long time in a reaction period and a low melting point.

### DISCLOSURE OF FIRST ASPECT OF THE INVENTION

The present invention aims at providing a polyester elastomer having a higher melting point in which a preparation period is shortened.
The present inventors have found that the problems can be solved by a polyester elastomer obtained by allowing to react a crystalline aromatic polyester which is a hard component, a particularly-selected resin which is a soft component, and a specified compound having isocyanate groups, and the present invention has been completed.

That is, the present invention provides a polyester elastomer obtained by allowing to react a crystalline aromatic polyester which is a hard component, at least one kind selected from an aliphatic polyester, a polyether, and a polycarbonate which are a soft component with at least one of a compound (hereinafter, referred to as "a compound containing isocyanate groups") containing isocyanate groups which is a compound having at least two isocyanate groups in the molecule. Further, the present invention provides a polyester elastomer obtained by allowing to react a crystalline aromatic polyester which is a hard component, at least one kind selected from an aliphatic polyester, a polyether, and a polycarbonate which are a soft component, and further at least one kind of compounds selected from a compound (hereinafter, referred to as "a compound containing hydroxyl groups") containing hydroxyl groups which is a compound having at least two hydroxyl groups in the molecule, or an epoxy compound, with the above-mentioned compound containing isocyanate groups. The polyester elastomers have a higher melting point, and those can be obtained in a short preparation time of period.

### BEST MODE FOR CARRYING OUT THE FIRST ASPECT OF THE INVENTION

Hereinafter, the present invention is illustrated in detail.
The crystalline aromatic polyester to be employed as a hard component in the present invention is a polymer mainly containing ester bonds or ester bonds and ether bonds, which has at least one aromatic groups as a recurring unit, and which has hydroxyl groups or carboxylic groups at terminals of the molecule and, which has a number average molecular weight of preferably 2000-200,000, more preferably 5,000-100,000. The content of the hydroxyl groups or carboxylic groups which are terminal groups in the molecule preferably ranges in 1.5-2.5 equivalents/mol. The value is more preferred in the vicinity of 0-2 equivalents/mol.

In the case that the value is excessively lower, a reaction with an isocyanate does not sufficiently proceed, resulting in that physical properties lower in a polymer produced. Contrarily, in the case that it is higher, gelation is apt to proceed in a polymer produced.
The content of carboxylic groups ranges in preferably 0-2 equivalents/mol. Reactivity of the isocyanate with hydroxyl groups is generally higher than reactivity of the isocyanate with carboxylic groups. Accordingly, in the case that the content of carboxylic groups in raw materials is higher, an epoxy compound is added in conditions described hereinafter.

On the other hand, in the case that a molecular weight is lower in the crystalline aromatic polyester, there increases the amount of the compound containing isocyanate groups to be employed, resulting in that it becomes difficult to obtain a polymer having a sufficient melting point. Contrarily, in the case that the molecular weight is excessively higher, physical properties as an elastomer are not shown in a polymer produced.
As preferred specific examples of the crystalline aromatic polyester, there can be enumerated a homoester such as a polyethylene terephthalate, a polybutylene terephthalate, a poly-1,4-cyclohexylene dimethylene terephthalate, and a polyethylene-2,6-naphthalate, and a cocondensed polyester thereof with an optional component.

The aliphatic polyester, polyether, and polycarbonate to be employed as a soft component in the present invention are a polymer (a raw material polymer) mainly composed of ester bonds and/or ether bonds, which have hydroxyl groups or carboxylic groups at terminals of the molecule, and which have a molecular weight of preferably 1000-200,000, and more preferably 20,000-100,000. The content of the hydroxyl groups or carboxylic groups which are terminals in the molecule preferably ranges in 1.5-2.5 equivalents/mol. The value is more preferred in the vicinity of 2 equivalents/mol. In the case that the value is smaller, a reaction with an isocyanate does not sufficiently occur, resulting in that physical properties lower in a polyester elastomer produced. The content of carboxylic groups preferably ranges in 0-0.5 equivalent/mol in the raw material polymer. A reactivity of a compound containing isocyanate groups with acid groups is generally higher than a reactivity with carboxylic groups. Accordingly, in the case that an acid value is high in raw materials, an epoxy compound is added in conditions described hereinafter.

On the other hand, in the case that a molecular weight is lower in the raw polymer, there increases the amount of the compound containing isocyanate groups to be employed, resulting in that it becomes difficult to obtain a polymer having a sufficient melting point. Contrarily, in the case that the molecular weight is excessively higher, physical properties as an elastomer are not shown in a polymer produced. As preferred specific examples of the raw polymer, there can be enumerated a homopolymer which includes lactones such as a poly-ε-caprolactone, a polybutyrolactone, a polyenantolactone, and a polycaprolactone, aliphatic polyesters such as a polylactic acid, a polyethylene adipate, and a polyethylene sebacate, a polyether such as a polyethylene glycol and a polybutylene glycol, and a polycarbonate, and a copolymerized polyester and copolymerized polyether ester in which the aliphatic polyesters are main components, and the above-mentioned components other than the main components are components to be copolymerized.
Of those, the polylactones are preferably employed as the soft component.
There may be simultaneously employed at least two kinds of the above-described hard component and soft component, respectively. In the present invention, as a mixing ratio of the hard component with respect to the soft component, the hard component/the soft component is 30/70-95/5, preferably 50/50-90/10, and more preferably 60/40-80/20 by weight ratio. In the case that the hard component is less than 30, crystallinity in the hard component is obstructed, resulting in that physical properties lower in a polymer obtained. Contrarily, in the case that it is more than 95, an elastomeric property is not shown in the polymer obtained.

As the compound containing isocyanate groups to be employed in the present invention, if it has one or more of the isocyanate groups in the identical molecule, although even a compound having any structures can be employed, there must be essentially employed a compound having two or more of the isocyanate groups in the identical molecule. As such the compound, there are enumerated isocyanates to be usually employed for the preparation of urethanes. Specifically, there can be exemplified diphenylmethane diisocyanate (MDI), tolyllene diisocyanate, a polymeric MDI, dianicidine diisocyanate, diphenylether diisocyanate, orthotolydine diisocyanate, naphthalene diisocyanate, triphenylmethane triisocyanate, triisocyanate phenyl thiophosphate, hexamethylene diisocyanate, isophorone diisocyanate, rydine diisocyanatemethyl ester, metaxylilene diisocyanate, 2,2,4-trimethylhexamethylene diisocyanate, a dimer acid diisocyanate, isopropilidenebis-4-cyclohexyl isocyanate, dicyclohexylmethane diisocyanate, methylcyclohexane diisocyanate, and tollylene diisocyanate, and a dimer thereof. Two or more kinds of isocyanates may be simultaneously employed.

As another embodiment of the present invention, there can be provided a polyester elastomer obtained by allowing to react at least one compound selected from the above-described compounds having hydroxyl group or epoxy compounds in addition to the above-described hard components, soft components, and compounds containing an isocyanate group. Herein, the compound having hydroxyl group is a compound having at least two hydroxyl groups in the molecule and, specifically, there can be enumerated diols such as propylene glycol, dipropylene glycol, ethylene glycol, diethylene glycol, 1,4-butane diol, and 1,6-hexane diol, triols such as trimethylol propane, glycerine hexanetriol, and phosphoric acid. Further, it may be a compound having other functional groups in the same molecule.

The compound having hydroxyl groups reacts with at least one ester bond, etc. in the above-described hard components or soft components, and it is employed in order to change terminal groups to hydroxyl groups together with changing the hard components or soft components to compounds having a low molecular weight. In the case that a molecular weight is higher in the hard components or soft components to be employed, unreacted soft components remain in resins because of a decrease in the concentration of the terminal groups, resulting in that physical properties of resins become worse. For the purpose of preventing this, in the case that a molecular weight is larger in raw materials for the hard components or soft components, the compound having hydroxyl groups is employed in a large amount and, in the case that a molecular weight is sufficiently lower in raw materials, it does not require to be employed. The compound having hydroxyl groups is employed in an amount of preferably 0.1-10 times by mol, and more preferably 0.5-5 times by mol based on the sum of a total mol number of terminal hydroxyl groups and total mol number of terminal carboxyl groups in the hard components or soft components.

The epoxy compound to be employed in the present invention is a compound having at least one epoxy group in the molecule.
As such the compound, there are a bisphenol type epoxy compound obtained by allowing to react bisphenol A with epichlorohydrin, a novolak type epoxy compound obtained by allowing to react a novolak resin with epichlorohydrin, polyglycidyl esters obtained by allowing to react a polycarboxylic acid with epichlorohydrin, an alicyclic compound type epoxy compound obtained from an alicyclic compound, glycidyl ethers obtained by allowing to react an aliphatic compound having alcoholic hydroxyl group with epichlorohydrin, an epoxidized butadiene, and an epoxy compound obtained from a compound having a double bond and a peroxide. Specifically, there are enumerated methylglycidyl ether, phenylglycidyl ether, diethyleneglycol diglycidyl ether, diglycidyl ester of hexahydrophthalic acid, an epoxidized polybutadiene, and an epoxidized SBS, and the like.

Such the epoxy compound is employed in order to produce hydroxyl groups at molecular terminals by reacting with terminal carboxyl groups at least one side in the above-described hard component and soft component.
Accordingly, in the case that molecular terminals in the hard component and soft component are almost hydroxyl groups, the use amount thereof may be less. Contrarily, in the case that molecular terminals in the hard component and soft component are almost carboxyl groups, the use amount thereof becomes more. It is employed in 0.8-2.0 times by mol based on the sum of total mol number of terminal hydroxyl groups and total mol number of terminal carboxyl groups in the hard components or soft components. More preferably, the epoxy compound is employed in 1.0-1.5 times by mol based on the content of carboxyl groups which is measured by an acid value in the hard components and the soft components.
By employing at least one of the compounds having hydroxyl group or the epoxy compound, there is accelerated a reaction among the hard component, the soft component, and the compound containing isocyanate groups. By the reaction, it is clear that there is shortened a time for the preparation of the polyester elastomer and, further, there can be suppressed a decline of physical properties by carboxyl groups.

The compound containing isocyanate groups in the present invention is employed in the addition amount of 0.5-2 times by mol, preferably 0.5-1.0 times by mol based on the sum of total mol number of terminal hydroxyl groups and total mol number of terminal carboxyl groups in the hard components and the soft components. Further, in another embodiment of the present invention, in the case that the above-described compounds having hydroxyl group are allowed to react in the polyester elastomer, those are employed in the addition amount of preferably 0.5-2 times by mol, and more preferably 0.5-1.0 times by mol based on the sum of total mol number of terminal hydroxyl groups, total mol number of terminal carboxyl groups in the hard components and the soft components, and total mol number hydroxyl groups in the compound having hydroxyl groups.

In the case of the preparation of the polyester elastomer, the compound containing isocyanate groups is supplied by adding in a melting state. Temperature for melt-kneading (a reaction temperature) of the compound containing isocyanate groups may be a temperature at which there can be actually melted the hard components, soft components, and the polyester elastomer produced. Usually, it is carried out at temperatures of 170-280°C. In the case that the reaction temperature is higher, there is required attention in a thermal decomposition of the hard components, soft components, and the polyester elastomer produced and, in the case that the reaction temperature is lower, there is required attention in crystallization and a decline of reaction rate. Kneading time is 1-100 minutes or so, and it is decided depending upon conditions such as a mixing style, temperatures, and reaction of carboxylic acids described hereinafter. Preferably, it is set up at 2-60 minutes.

Reaction of such the compound containing an isocyanate group can be conducted in the presence of catalysts. As the catalysts, there can be employed every catalysts which can be employed for a reaction of usual isocyanates, there can be enumerated amines and a variety of organometallic compounds. As the amines, there can be employed monoamines such as triethylamine and N,N-dimethylcyclohexyl amine, diamines such as N,N,N',N'-tetramethyl ethylenediamine, triamines such as N,N,N',N'',N''-pentamethyl diethylenetriamine, and triethylenediamine, piperazine and cyclic amines which have an imidazole structure in the molecule, other alcohol amines, and ether amines, and the like. As the organometallic compounds, there can be mainly employed organic tin compounds and carboxylic salts thereof, and halides, specifically, there can be enumerated stannous octoate, dibutyltin diacetate, dibutyltin dilaurate, dibutyltin dimercaptide, dibutyltin thiocarboxylate, dibutyltin dimaleate, and dioctyltin dimercaptide. The catalysts may be employed in combination of two or more.
Such the catalysts may be simultaneously added with the compound containing an isocyanate group, and may be added after the compound containing isocyanate groups was in advance dispersed into the hard components and the soft components in a melting state and, contrarily, the catalysts may also be in advance dispersed.

In the case that at least one kind of the compounds having hydroxyl group or the epoxy compounds are employed, those are in advance added into one or both of the hard components and the soft components in a melting state, and those may be in advance added into one or both of the hard components and the soft components in a melting state together with the compound containing isocyanate groups. In the case of employing at least one kind of the compounds having hydroxyl group or the epoxy compounds, a reaction temperature may be a temperature at which there can be actually melted the hard components, soft components, and a resin produced, and it is preferably carried out at 170-280°C. In the case that the reaction temperature is higher, there occasionally occurs a thermal decomposition in the hard components, soft components, and a resin produced and, in the case that the reaction temperature is lower, there occasionally occur crystallization and a decline of reaction rate. Reaction period of time is preferably 1-100 minutes or so, more preferably 2-60 minutes, and it is decided depending upon a variety of conditions such as a mixing style and temperatures.

In the case of employing at least one kind of the compounds having hydroxyl group or the epoxy compounds, a reaction can be carried out in the presence of catalysts. As the catalysts, there can be employed every catalysts which can be employed for an esterification reaction of an ester with hydroxyl group and, as specific examples, those are metals such as lithium, sodium, potassium, rubidium, cesium, magnesium, calcium, barium, strontium, zinc, aluminum, titanium, cobalt, germanium, tin, lead, antimony, arsenic, cerium, boron, cadmium, and manganese, oxides thereof, organometallic compounds thereof, organic acid salts thereof, halides thereof, and alkoxides, and the like. Of those, as preferred ones, there are the organometallic compounds of tin, aluminum, and titanium, organic acid salts thereof, halides thereof, and alkoxides thereof. As more preferred ones, there are exemplified organotin compounds. For example, those are tin tetraacetate, monobutyltin hydroxide, monobutyltin tri-2-ethylhexanoate, dibutyltin oxide, dibutyltin dilaurate, and tin dioctanoate, and the like. Further, as another one, there can be employed every compounds which can be employed for a reaction of epoxy groups, and there can be specifically enumerated amines, phosphorus compounds, carboxylic acids, organic sulfonic acids, sulfuric acid, and metallic salts thereof which are acidic compounds. Such the catalysts may be employed in combination of two or more kinds.

Such the catalysts may be simultaneously added with at least one kind of the compounds containing hydroxyl group or the epoxy compounds, or may be added after the compounds were in advance dispersed into the hard components and/or the soft components in a melting state and, contrarily, the catalysts may also be in advance dispersed. Otherwise, the compounds containing hydroxyl group or the epoxy compounds may be added separately from each other.

Although the respective reactions to be carried out in the present invention can be carried out even in an atmosphere of oxygen and air, those can be preferably carried out in an atmosphere of an inert gas from a viewpoint of preventing discoloration of the polyester elastomer obtained. Specifically, there can be enumerated nitrogen, helium, argon, and methane, and the like. Although pressure changes depending upon reaction temperatures and physical properties of the compound containing isocyanate groups, carboxylic acids, and catalysts to be employed, it is desirable in a range of preferably 0.001-10 torr, and more preferably 0.01-2 torr. In the case that it becomes problematic that reagents are distilled out, it is preferred to maintain a high pressure and, contrarily, in order to remove residual low-boiling-ingredients, it is preferred to maintain not more than 0.1 Torr.

In the present invention, the hard components, the soft components, compound containing isocyanate groups, the compounds containing hydroxyl group, the epoxy compounds, and the catalysts may be kneaded and allowed to react in a melting state by different methods, respectively. Further, the methods may be any one of a batchwise, semi-continuous, and continuous style. Still further, form of apparatuses is not particularly limited, and there can be employed an agitation type reactor, a kneader type reactor, and an extruder type reactor, and the like. In addition, the above-described methods and apparatuses may be repeatedly employed, or employed in combination of two or more kinds.

In the polyester elastomer obtained in the present invention, there can be applied a variety of molding methods such as extrusion molding, injection molding, and blow molding, and it can be employed as a variety of molded articles, for example, tubes, hoses, films, sheets, packings, bottles, rolls, belts, gears, nameplates, covers, hooks, switches, resinous springs, fasteners, outside mounting parts for cars, vibration damping materials, or coating agents.

### EXAMPLES OF FIRST ASPECT OF THE INVENTION

Hereinafter, although the present invention is specifically illustrated by Examples, the present invention is not limited by those.

### (Method for evaluations)

1. Average molecular weight and Mw/Mn: It is a molecular weight based on a standard Polystyrene which is calculated by a GPC (50°C, flow rate of 1 ml/minute) measurement using a solvent of chloroform/hexafluoro isopropanol=9/1 (volume ratio).
2. Melt viscosity: It was measured at 240°C and 10 kg/cm² using a Melt flow tester manufactured by Shimadzu Seisakusyo.
3. PBT/PCL (polycaprolactone) weight ratio: It was calculated by ¹H-NMR.
4. an average length in a block chain of PBT, an average length in a block chain of PCL: It was calculated by ¹³C-NMR. the Reference "Polymer Literatures" Vol. 49, No. 7, pp 561-568 (Jul. 1992); It is to be noted that the average length in a block chain is an average length of a continuous chain stated in the literature, which is measured by the product of an average number of a continuous chain with a molecular weight of respective recurring units.
5. Tensile strength, 50% Modulus (kg/cm²): JIS K7113
6. Fracture strength (kg/cm²): JIS K7113
7. Extension in fracture (%): JIS K7113

### (Example 1)

A batchwise style reaction vessel having capacity of 20 liter equipped with an agitator, a tube for supplying nitrogen, and an equipment for reducing pressure was charged with 12 kg of a polybutylene terephthalate having a number average molecular weight of 19,000 (Duranate 400FP manufactured by Polyplastics, Ltd.) which is a crystalline aromatic polyester resin, 8 kg of a polycaprolactone having a number average molecular weight of 10,000 (Placcel HIP manufactured by Daicel Chemical, Ltd.) which is an aliphatic polyester resin, and 20 g of monobutyl tintris(2-ethylhexanate) which is a catalyst. Inside of the reaction vessel was sufficiently replaced with nitrogen, followed by melting while streaming nitrogen and heating at 230°C.
While maintaining the temperature at 230°C, pressure was reduced to 100 torr in a state of streaming nitrogen, followed by mixing while agitating for 20 minutes. After mixed, the reduced pressure was released, followed by giving pressure of 2 atmospheres and by preparing pellets with a pelletizer while cooling strands from contents through a water vessel. The pellets obtained were dried at 160°C for 2 hours under streaming nitrogen. Subsequently, melt kneading was conducted at 240°C by feeding dried pellets into an inlet for feeding of a twin-screw extruder having an average residence time of 5 minutes at 15 kg/hour with a fixed-amount feeder, and feeding hexamethylene diisocyanate which is an isocyanate compound into the inlet for feeding of at 0.07 kg/hour with a fixed-amount feeder, and a polyester elastomer was obtained by cooling an extruded product.
Table 1-1 shows an average molecular weight measured by a GPC, melt viscosity, of the elastomer, PBT/PCL weight ratio, an average length in a chain of PBT segment, and an average length in a chain of PCL segment, melting point, crystallization temperature, and results of tensile tests.

### (Comparative Example 1)

The same batchwise style reaction vessel having capacity of 20 liter was likewise charged as in the Example 1 with 12 kg of a polybutylene terephthalate having a number average molecular weight of 19,000 (Duranate 400FP manufactured by Polyplastics, Ltd.) which is a crystalline aromatic polyester resin, 8 kg of e-caprolactone monomer. Inside of the reaction vessel was replaced with nitrogen, followed by melting while heating at 230°C.

Agitation and mixing were carried out for 90 minutes while maintaining the temperature at 230°C in order to proceed a ring-opening polymerization of e-caprolactone monomer and an esterification reaction. Further, agitation and mixing were carried out at the reduced pressure of 10 torr for 30 minutes to prepare a polyester elastomer after gradually reducing pressure in a state of streaming nitrogen. Physical properties of the elastomer were also likewise measured as in the Example 1 after pelletized. Table 1-1 shows evaluation results of the physical properties

### (Comparative Example 2)

The same procedures were likewise followed as in the Comparative Example 1, except that there was employed a polybutylene terephthalate having a number average molecular weight of 41,000 (Duranate 800FP manufactured by Polyplastics, Ltd.) which is a crystalline aromatic polyester resin (A). Table 1-1 shows evaluation results of the physical properties

**Table 1-1**

| Measured items | Example 1 | Comparative Example | |
|---|---|---|---|
| | | 1 | 2 |
| Number average molecular weight (Mn) | 39,000 | 23,000 | 53,000 |
| Mw/Mn | 2.88 | 2.13 | 2.70 |
| Melt viscosity (poise) | 3,380 | 480 | 5,330 |
| PBT/PCL (weight ratio) | 58/42 | 61/39 | 61/39 |
| Average length in a block chain of PBT | 2,700 | 1,600 | 1,300 |
| Average length in a block chain of PCL | 2,200 | 1,300 | 1,000 |
| 50% Modulus (kg/cm²) | 150 | 160 | 150 |
| Fracture strength (kg/cm²) | 320 | 170 | 350 |
| Extension in fracture (%) | 700 | 380 | 690 |
| Melting point (°C) | 217 | 207 | 206 |
| Crystallization temperature (°C) | 156 | 151 | 145 |

### POSSIBILITY OF UTILIZATION IN INDUSTRY BY THE FIRST ASPECT OF THE INVENTION

As described hereinabove, according to the present invention, a polyester elastomer having a higher melting point can be readily obtained within a shortened time by allowing to react at least one selected from a crystalline aromatic polyester which is a hard component and a aliphatic polyester, a polyether, and a polycarbonate which are a soft component with the above-described compound containing isocyanate groups, in a melting state or in the presence of at least one of a compound having hydroxyl groups which has two or more hydroxyl groups in the molecule or an epoxy compound.

### TECHNICAL FIELD OF SECOND ASPECT OF THE INVENTION

The present invention relates to a novel polyester elastomer. In more detail, it relates to a polyester elastomer obtained by allowing to react the hard component (A) and the soft component (B) in the first aspect of the invention with a compound (C) containing at least one kind of a compound which has at least two epoxy groups in the molecule in place of the compound containing isocyanate groups in the first aspect of the invention.

### BACKGROUND ART OF THE SECOND ASPECT OF THE INVENTION

There can be cited the same background art as in the first aspect of the invention, and there is left the same problem to be solved.

### DISCLOSURE OF THE SECOND ASPECT OF THE INVENTION

The present invention aims at providing a polyester elastomer which has a higher melting point, and in which there is shortened a time for the preparation, as well as the purpose in the first aspect of the invention.
The present inventors has found that the problems can be solved by a polyester elastomer obtained by allowing to react a crystalline aromatic polyester which is a hard component (A) with a particularly-selected resin or a specified compound containing an epoxy group which is a soft component (B), and attained a completion of the present invention.

That is, the present invention provides a polyester elastomer obtained by allowing to react a crystalline aromatic polyester which is a hard component (A), at least one kind selected from the group of an aliphatic polyester, a polyether, and a polycarbonate which are a soft component (B) with a compound (C) containing epoxy groups (hereinafter, referred to as "compound (C) containing epoxy groups") containing an epoxy compound which has at least two epoxy groups in the molecule.
Further, the present invention provides a polyester elastomer obtained by in advance allowing to react a crystalline aromatic polyester which is a hard component (A), at least one kind selected from an aliphatic polyester, a polyether, and a polycarbonate which are a soft component (B), and further at least one kind selected from a carboxylic acid (D) (hereinafter, referred to as "carboxylic acid (D)") having at least two carboxyl groups in the molecule or an acid anhydride thereof, and then by allowing to react the above-described compound (C) containing epoxy groups.
The polyester elastomers have a higher melting point, and those can be obtained in a short preparation time of period.

### BEST MODE FOR CARRYING OUT THE SECOND ASPECT OF THE INVENTION

Hereinafter, the present invention is illustrated in detail.
The crystalline aromatic polyester to be employed as a hard component (A) in the present invention is the same crystalline aromatic polyester to be employed in the first aspect of the invention. Total value of hydroxyl groups or carboxylic groups which are terminal groups in the molecule is more preferred in the vicinity of 2 equivalents/mol. In the case that the value is excessively lower, a reaction with the compound (C) containing epoxy groups does not sufficiently proceed, resulting in that physical properties lower in a polymer produced. Contrarily, in the case that it is higher, gelation becomes apt to proceed in a polymer produced.

On the other hand, in the case that a molecular weight is lower in the crystalline aromatic polyester, there increases the amount of the compound (C) containing epoxy groups, resulting in that it becomes difficult to obtain a polymer having a sufficient melting point. Contrarily, in the case that the molecular weight is excessively higher, physical properties as an elastomer are not shown in a polymer produced. As preferred specific examples of the crystalline aromatic polyester, there can be enumerated the same ones as shown in the first aspect of the invention.

The aliphatic polyester, a polyether, and a polycarbonate which are employed as a soft component (B) in the present invention, which is a polymer (a raw material polymer) mainly containing ester bonds and/or ether bonds, are the same ones as illustrated in the first aspect of the invention. Total value of hydroxyl groups or carboxylic groups which are terminal groups in the molecule is preferred in 1.5-2.5 equivalents/mol, and more preferred in the vicinity of 2 equivalents/mol. In the case that the value is lower, a reaction with the compound (C) containing epoxy groups does not sufficiently proceed, resulting in that physical properties lower in a polymer produced. Contrarily, in the case that it is higher, gelation becomes apt to proceed in a polymer produced.

On the other hand, in the case that a molecular weight is lower in raw material polymers, there increases the amount of the compound (C) containing epoxy groups to be employed, resulting in that it becomes difficult to obtain a polymer having a sufficient melting point. Contrarily, in the case that the molecular weight is excessively higher, physical properties as an elastomer are not shown in a polymer produced. Preferred specific examples of the raw material polymers are the same as described in the first aspect of the invention.

Of those, the polylactones are preferably employed as the soft component (B).

The above-described hard component (A) and soft component (B) can be simultaneously employed in combination of two or more kinds, respectively. In the present invention, a composing ratio of the hard component (A) with respect to the soft component (B) is the hard component (A)/the soft component (B)=30/70-95/5 by weight, preferably 50/50-90/10, more preferably 60/40-80/20. In the case that the hard component (A) is less than 30 by weight ratio, crystallization is obstructed in the hard component (A), resulting in that physical properties lower in a polymer produced. Contrarily, in the case that it is more than 95 by weight ratio, properties as an elastomer are not shown in a polymer produced.

The compound (C) containing epoxy groups to be employed in the present invention is a compound containing at least one kind of an epoxy compound having at least two epoxy groups in the molecule. It means a unitary compound and a mixture, and it may contain an epoxy compound having one epoxy group in one molecule.
In the present invention, the compound (C) containing epoxy groups are employed as a coupling agent. As the epoxy compound having at least two epoxy groups in the molecule, there are a bisphenol type epoxy compound obtained by allowing to react bisphenol A with epichlorohydrin, a novolak type epoxy compound obtained by allowing to react a novolak resin with epichlorohydrin, polyglycidyl esters obtained by allowing to react a polycarboxylic acid with epichlorohydrin, an alicyclic compound type epoxy compound obtained from an alicyclic compound, glycidyl ethers obtained by allowing to react an aliphatic compound having alcoholic hydroxyl group with epichlorohydrin, an epoxidized butadiene, and an epoxy compound obtained from a compound having a double bond and a peroxide. Specifically, there are enumerated methylglycidyl ether, phenylglycidyl ether, a variety of glycidyl esters of a fatty acid, diethyleneglycol diglycidylether, diglycidyl ester of phthalic acid, diglycidyl ester of hexahydrophthalic acid, an epoxidized polybutadiene, and an epoxidized SBS, and the like.

Further, as another embodiment of the present invention, it is also preferred that terminal hydroxyl groups in the polyester elastomer are converted to carboxylic groups by at least one kind of compounds selected from the above-described carboxylic acid (D) or an anhydride thereof (both are collectively named as carboxylic acids). As the carboxylic acid (D) having at least two carboxylic groups in the molecule, there can be enumerated dibasic acids such as oxalic acid, succinic acid, adipic acid, terephthalic acid, isophthalic acid, phthalic acid, and naphthalic acid. Since epoxy groups react with carboxylic groups more quickly than with hydroxyl groups, the addition of at least one kind of compounds selected from the carboxylic acids or anhydrides thereof is preferred from a viewpoint of a quick proceed of a coupling reaction by converting from terminal hydroxyl groups to carboxylic groups in the polyester elastomer.
It is to be noted that there substantially react all the carboxylic acids (D) or an anhydride thereof.

The polyester elastomer of the present invention is obtained by allowing to react the compound (C) containing epoxy groups in the amount of epoxy groups thereof of preferably 0.5-2.0 times by mol, more preferably 0.5-1.0 times by mol based on a total mol number of terminal carboxyl groups in the above-described hard components (A) and soft components (B). Further, in another embodiment of the present invention, in the case that the polyester elastomer is a product obtained by allowing to react an acid anhydride of the above-described carboxylic acid (D) in addition to the compound (C) containing epoxy groups, the carboxylic acid (D) is desirably allowed to react in an amount of carboxyl groups in which carboxyl groups (1 mol of the acid anhydride is looked upon as 1 mol of carboxyl groups) in the anhydride of the carboxylic acid (D) are 0.1-2.0 times by mol, preferably 0.2-1.0 times by mol of a total mol number of terminal hydroxyl groups in the above-described hard components (A) and soft components (B), and the compound (C) containing epoxy groups is desirably allowed to react in an amount in which epoxy groups are preferably 0.5-2.0 times by mol, more preferably 0.5-1.0 times by mol of a total mol number of carboxyl groups (1 mol of the acid anhydride is looked upon as 1 mol of carboxyl groups) in the hard components (A) and soft components (B).
Still further, as an other embodiment, in the case that the polyester elastomer is obtained by allowing to react the above-described carboxylic acid (D) and an anhydride thereof, the carboxylic acid (D) is desirably allowed to react in an amount in which carboxyl groups are preferably 0.1-10 times by mol, more preferably 1-5 times by mol of a total mol number of terminal hydroxyl groups and carboxyl groups in the above-described hard components (A) and soft components (B), the anhydride of the carboxylic acid (D) is desirably allowed to react in an amount in which carboxyl groups (1 mol of the acid anhydride is looked upon as 1 mol of carboxyl groups) are 0.1-2.0 times by mol, more preferably 0.2-1.0 times by mol of a total mol number of terminal hydroxyl groups in the above-described hard components (A) and soft components (B), and the compound (C) containing epoxy groups is desirably allowed to react in an amount in which epoxy groups are preferably 0.5-2.0 times by mol, more preferably 0.5-1.0 times by mol of a total mol number of carboxyl groups in the hard components (A) and soft components (B) and carboxyl groups in the carboxylic acid (D) and an anhydride of thereof.

In the preparation of the polyester elastomer, the compound (C) containing epoxy groups is allowed to react by feeding in a melting state. Temperature (a reaction temperature) for melt-kneading the compound (C) containing epoxy groups may be temperatures at which there actually melt the hard components (A), soft components (B), and a resin produced. Usually, it is carried out at temperatures of 170-280°C. In the case that the reaction temperatures are higher, there must be paid attention to a thermal decomposition in the hard components (A), the soft components (B), and a resin produced. In the case that the reaction temperatures are lower, there must be paid attention to crystallization and a decline in reaction rate. Time for kneading is 1-100 minutes or so, and it is decided according to conditions such as a mixing style and the temperatures, and reactions of the carboxylic acids described hereinafter. Preferably, it is set up at 20-60 minutes.

In the case that the above-described carboxylic acids (D) are employed, preferably, those are in advance added into one or both of the hard components (A) and the soft components (B) in a melting state, and those may be in advance added into one or both of the hard components (A) and the soft components (B) in a melting state together with the compound (C) containing epoxy groups. In the case of containing the above-described carboxylic acids (D), a reaction temperature may be a temperature at which there can be actually melted the hard components (A), soft components (B), and a resin produced, and it is preferably carried out at 170-280°C. In the case that the reaction temperature is higher, there occasionally occurs a thermal decomposition in the hard components (A), soft components (B), and a resin produced and, in the case that the reaction temperature is lower, there occasionally occur crystallization and a decline of reaction rate. Reaction period of time is preferably 1-100 minutes or so, more preferably 2-60 minutes, and it is decided depending upon a variety of conditions such as a mixing style and temperatures.

In a coupling reaction of the compound (C) containing epoxy groups, there are employed catalysts which include phosphines such as triphenylphosphine and amines (tertiary), triethylamine, diazabicycloundecane and piridine, and the like. Further, in a reaction of the hard components (A) and soft components (B) with the carboxylic acids, there are employed tin compounds, titanium compounds, and zirconium compounds. Of those, monobutyl tin and stannous chloride are preferred because of a high reaction rate.

Such the catalysts may be simultaneously added with the compound (C) containing epoxy groups, or the compound (C) containing epoxy groups and the above-described carboxylic acids (D) or an anhydride thereof, or the catalysts may be added after the catalysts were in advance dispersed into the hard components (A) and/or the soft components (B) in a melting state and, contrarily, after the catalysts were in advance dispersed, there may be separately or simultaneously added the compound (C) containing epoxy groups, or the compound (C) containing epoxy groups and the above-described carboxylic acids (D) or an anhydride thereof.

Although the respective reactions to be carried out in the present invention can be carried out even in an atmosphere of oxygen and air, those can be preferably carried out in an atmosphere of an inert gas from a viewpoint of preventing discoloration of the polyester elastomer obtained. Specifically, there can be enumerated nitrogen, helium, argon, and methane, and the like. Although pressure changes depending upon reaction temperatures and properties of the compound (C) containing epoxy groups, carboxylic acids, and catalysts to be employed, it is desirable in a range of preferably 0.001-10 atm, and more preferably 0.01-2 atm. In the case that it becomes problematic that raw materials are distilled out, it is preferred to maintain a high pressure and, contrarily, in order to remove residual low-boiling-ingredients, it is preferred to maintain not more than 0.1 atm.

In the present invention, the hard components (A), the soft components (B), the compound (C) containing epoxy groups, the carboxylic acids (D) or the anhydride thereof, and the catalysts may be kneaded and allowed to react in a melting state by different methods, respectively. Further, the methods may be any one of a batchwise, semi-continuous, and continuous style. Still further, form of apparatuses is not particularly limited, and there can be employed an agitation type reactor, a kneader type reactor, and an extruder type reactor, and the like. In addition, the above-described methods and apparatuses may be repeatedly employed, or employed in combination of two or more kinds.

In the polyester elastomer obtained in the present invention, there can be applied a variety of molding methods such as extrusion molding, injection molding, and blow molding, and it can be employed as a variety of molded articles, for example, tubes, hoses, films, sheets, packings, bottles, rolls, belts, gears, nameplates, covers, hooks, switches, resinous springs, fasteners, outside mounting parts for cars, vibration damping materials, or coating agents.

### EXAMPLES OF THE SECOND ASPECT OF INVENTION

Hereinafter, although the present invention is specifically illustrated by Examples, the present invention is not limited by those. It is to be noted that the number of Examples and Comparative Examples is newly given in respective inventions, hereinafter.

### (Method for evaluations)

1. Average molecular weight and Mw/Mn: It is the same as in the first aspect of the invention.
2. Melt viscosity: It is the same as in the first aspect of the invention.
3. Weight ratio of the hard components (A)/the soft components (B): It is the same as in the first aspect of the invention.
4. Average chain length in the hard components (A) and average chain length in the soft components (B): It is the same as in the first aspect of the invention.
5. Tensile strength, 50% Modulus (kg/cm²): JIS K7113
6. Fracture strength (kg/cm²): JIS K7113
7. Extension in fracture (%): JIS K7113
8. Melting point (°C): JIS K7121
9. Crystallization temperature (°C): JIS K7121

### (Example 1)

A batchwise style reaction vessel having capacity of 20 liter equipped with an agitator, a tube for supplying nitrogen, and an equipment for reducing pressure was charged with 12 kg of a polybutylene terephthalate having a number average molecular weight of 19,000 (Duranate 400FP manufactured by Polyplastics, Ltd.) which is a crystalline aromatic polyester resin, 8 kg of a polycaprolactone having a number average molecular weight of 10,000 (Placcel HIP manufactured by Daicel Chemical, Ltd.) which is an aliphatic polyester resin, 0.42 kg of phthalic anhydride which is a carboxylic anhydride having at least two carboxylic groups, 0.1 g of triphenylphosphine which is a catalyst for a reaction of the compound (C) containing epoxy groups with carboxylic groups, and 20 g of monobutyltin tris(2-ethylhexanate) which is a catalyst for a reaction of hydroxyl groups at terminals of polymer with the carboxylic anhydride. Inside of the reaction vessel was sufficiently replaced with nitrogen, followed by melting while streaming nitrogen and heating at 230°C.
While maintaining the temperature at 230°C, pressure was reduced to 10 torr in a state of streaming nitrogen, followed by mixing while agitating for 20 minutes to make proceed the reaction of hydroxyl groups at terminals of polymer with the carboxylic anhydride. After mixed, the reduced pressure was released, followed by giving pressure of 2 atmospheres and by preparing pellets with a pelletizer while cooling strands from contents through a water vessel. The pellets obtained were dried at 160°C for 2 hours under streaming nitrogen.
Subsequently, melt kneading was carried out at 240°C by feeding dried pellets into an inlet for feeding of a twin-screw extruder having an average residence time of 5 minutes at 15 kg/hour with a fixed-amount feeder, and feeding an alicyclic-compound-type epoxy compound "Celloxide 2021" (3,4-epoxycyclohexylmethyl-3',4'-epoxycyclohexanecarboxylate manufactured by Daicel Chemical Industries, Ltd.) which is the compound (C) containing epoxy groups into the inlet for feeding at 0.265 kg/hour with a fixed-amount feeder, and a polyester elastomer was obtained. Time required for reaction was 25 minutes as described hereinabove. Table 1-2 shows an average molecular weight measured by a GPC, melt viscosity, a weight ratio of the hard components (A)/the soft components (B), an average chain length in the hard components (A), and an average chain length in the soft components (B), melting point, crystallization temperature, and results of tensile tests.

### (Comparative Example 1)

The same batchwise style reaction vessel having capacity of 20 liter was likewise charged as in the Example 1 with 12 kg of a polybutylene terephthalate having a number average molecular weight of 19,000 (Duranate 400FP manufactured by Polyplastics, Ltd.) which is a crystalline aromatic polyester resin, 8 kg of e-caprolactone monomer. Inside of the reaction vessel was replaced with nitrogen, followed by melting while heating at 230°C.
Agitation and mixing were carried out for 90 minutes while maintaining the temperature at 230°C in order to make proceed a ring-opening polymerization of ε-caprolactone monomer and an esterification reaction. Further, agitation and mixing were carried out at the reduced pressure of 10 torr for 30 minutes to prepare a polyester elastomer after gradually reducing pressure in a state of streaming nitrogen. Time required for reaction was 120 minutes as described hereinabove. Physical properties of the elastomer were also likewise measured as in the Example 1 after pelletized. Table 1-2 shows evaluation results of the physical properties in the elastomer.

### (Comparative Example 2)

The same operations were likewise followed as in the Comparative Example 1 except that there was employed a polybutylene terephthalate having a number average molecular weight of 41,000 (Duranate 800FP manufactured by Polyplastics, Ltd.) which is a crystalline aromatic polyester resin (A). Table 1-2 shows evaluation results of the physical properties in the elastomer.

**Table 1-2**

| Measured items | Example 1 | Comparative Example | |
|---|---|---|---|
| | | 1 | 2 |
| Number average molecular weight (Mn) | 48,000 | 23,000 | 53,000 |
| Mw/Mn | 2.54 | 2.13 | 2.70 |
| Melt viscosity (poise) | 4,670 | 480 | 5,330 |
| Hard component/Soft component (weight ratio) | 60/40 | 61/39 | 61/39 |
| Average length of a block chain in Hard component | 3,100 | 1,600 | 1,300 |
| Average length of a block chain in Soft component | 2,600 | 1,300 | 1,000 |
| 50% Modulus (kg/cm²) | 160 | 160 | 150 |
| Fracture strength (kg/cm²) | 340 | 170 | 350 |
| Extension in fracture (%) | 570 | 380 | 690 |
| Melting point (°C) | 216 | 207 | 206 |
| Crystallization temperature (°C) | 157 | 151 | 145 |

### POSSIBILITY OF UTILIZATION IN INDUSTRY BY THE SECOND ASPECT OF THE INVENTION

As described hereinabove, the polyester elastomer of the present invention can be obtained within a shortened time for the preparation by allowing to react a hard component (A) and a soft component (B) with a compound (C) containing epoxy groups, and which has a high melting point.

### TECHNICAL FIELD OF THIRD ASPECT OF THE INVENTION

Third aspect of the invention relates to a polyester elastomer having an excellent hydrolysis resistance (a thermally aging resistance). In more detail, it relates to a polyester elastomer which is excellent in a heat resistance, oil resistance, abrasion resistance, impact resistance, and hydrolysis resistance, and which can be preferably employed as parts for cars, large-sized machines, industrial machines, and home electric appliances such as hoses, tubes, belts, gears, connectors, tanks, parts for a battery, socket, covers for a code, and bumpers, and a process for the preparation thereof.

### BACKGROUND ART OF THE THIRD ASPECT OF THE INVENTION

A polyester elastomer has been preferably employed as parts for cars, and the like owing to physical properties such as an excellent heat resistance, oil resistance, and impact resistance.

However, the polyester elastomer has a serious disadvantage that it is poor in hydrolysis resistance, and there is a problem such as durability as parts for cars that it is apt to cause a thermal deterioration in molding, resulting in that an abrupt decline in strength and impact resistance and instability of melt viscosity in a molding process. Therefore, in order to improve the hydrolysis resistance of a polyester elastomer, there have been tried a variety of investigations until now. In JP-B-91077826 Official Gazette, in order to improve the hydrolysis resistance of a polyester elastomer, there is described the addition of 0.3-10% by weight of a monofunctional epoxy compound and a bifunctional epoxy compound. Further, in JP-B-94019267 Official Gazette, there is described the addition of an epoxy compound having one or more functionalities, a weatherability stabilizer, and a tertiary phosphine. By the methods, although there is obtained a certain level of an effect in an improvement, there is desired a further drastic improvement.

### DISCLOSURE OF THE THIRD ASPECT OF THE INVENTION

The present invention aims at providing a polyester elastomer in which hydrolysis resistance is improved, and which is excellent in a heat resistance, oil resistance, abrasion resistance, and impact resistance.

The present inventors have found that hydrolysis resistance is excellent in a polyester elastomer having a unique structure and a high melting point, in which a hard segment (A) is a polyester mainly composed of a polyalkylene naphthalate and a soft segment (B) is an aliphatic polyester having an average block chain length of 1000-5000, and a process for the preparation thereof, and the present invention has been completed.
That is, the present invention provides a polyester elastomer characterized in that a hard segment (A) is a polyester which has a melting point of 220-320°C mainly composed of a polyalkylene naphthalate, and a soft segment (B) is an aliphatic polyester having an average block chain length of 1000-5000.
Also, the present invention provides a process for the preparation of a polyester elastomer characterized in that a polyester which is a hard segment (A) mainly composed of a polyalkylene naphthalate which has a melting point of 220-320°C is coupled on an aliphatic polyester which is a soft segment (B).

### BEST MODE FOR CARRYING OUT THE THIRD ASPECT OF THE INVENTION

Hereinafter, the present invention is illustrated in detail.
The hard segment (A) in the polyester elastomer of the present invention is an aromatic polyester mainly composed of a polyalkylene naphthalate, and it is an aromatic polyester which has a relatively high melting point of 220-320°C, and preferably 230-300°C. In the case that the melting point is less than 220°C, there also exists a use incapable of using in view of heat resistance. Also, in the case that the melting point exceed 320°C, decomposition is unpreferably caused in the soft segment (B). The aromatic polyester is a polyester obtained by a condensation reaction of naphthalene dicarboxylic acid or a lower ester thereof with a glycol. As the glycol, there can be exemplified ethylene glycol, diethylene glycol, 1,4-butane diol, and 1,6-hexane diol, and cyclohexane dimethanol, and the like.
Proportion of the polyalkylene naphthalate in the hard segment (A) is preferably not less than 60% by weight, more preferably not less than 80% by weight, and most preferably not less than 90% by weight. In the case that the proportion of the polyalkylene naphthalate is less than 60%, there unpreferably lower a hydrolysis resistance and a heat resistance in the polyester elastomer obtained. Components other than the polyalkylene naphthalate in the above-described aromatic polyester are a polyester in which there is employed an aromatic dicarboxylic acid typified by terephthalic acid and isophthalic acid or a lower ester thereof as raw materials, and those are cocondensed with naphthalene dicarboxylic acid or a lower ester thereof.

Components in the soft segment (B) composing the polyester elastomer of the present invention are an aliphatic polyester having an average block chain length of 1000-5000. The aliphatic polyester is a polymer mainly composed of ester bonds and/or ether bonds, and it has hydroxyl groups or carboxyl groups at molecular terminals. There is employed an aliphatic polyester having an average block chain length of 1000-5000, preferably 1500-4000, and more preferably 2000-3000 which is measured by ¹³C-NMR. In the case that the average block chain length is less than 1000, there unpreferably lower rigidness and heat resistance. Further, in the case of exceeding 5000, ductility unpreferably lowers.
As the aliphatic polyester, there are typically enumerated polylactones, condensates of an aliphatic dibasic acid with a glycol, and a variety of condensates of hydroxyalkyl carboxylic acids. As specific examples thereof, there are exemplified a polycaprolactone and a caprolactone-based copolymer (these are named polycaprolactones), condensates of adipic acid with ethyleneglycol, 1,4-butanediol, and neopentyl glycol, and condensates of sebasic acid or succinic acid with the above-described glycols, and the like. Of those, the polycaprolactones, above all, the polycaprolacton is preferred as the soft segment (B).

In the preparation of the polyester elastomer, as a mixing proportion of the hard segment (A) with the soft segment (B), the hard segment (A) preferably ranges in 50-95% by weight (total of the hard segment (A) and the soft segment (B) is 100% by weight), more preferably in 60-90% by weight, and most preferably in 60-80% by weight. In the case that the hard segment (A) is less than 50% by weight, rigidness and heat resistance unpreferably lower in the polyester elastomer obtained. Further, in the case of exceeding 95% by weight, ductility is unpreferably poor in the polyester elastomer.

Reaction temperature in a coupling reaction desirably ranges from a melting point of a polyester mainly composed of a polyalkylene naphthalate which is the hard segment (A) which is a raw material to 300°C. In the case of exceeding 300°C, (there are caused an esterification reaction and a depolymerization reaction), decomposition and discoloration are unpreferably caused. Reaction period of time is preferably from 10 minute to 2 hours, and more preferably from 20 minute to 1 hour. In the case of less than 10 minutes, reaction is insufficient, resulting in that rigidness and elasticity are lower. Also, in the case of exceeding 2 hours, there proceed an esterification reaction and a depolymerization reaction, and a decline of strength and discoloration are unpreferably caused. As a preparation apparatus, one extruder is employed in order to melt knead by feeding the hard segment (A) resin and the soft segment (B) resin, respectively, or a heating roll or a Banbury mixer is employed in order to melt knead, followed by pelletizing and crushing.

In the coupling reaction, there may be added an isocyanate group-contained compound having at least one isocyanate group in the identical molecule. As the isocyanate group-contained compound, there can be enumerated the same isocyanate group-contained compound as in the first aspect of the invention. Of those, hexamethylene diisocyanate is preferably employed.

In the polyester elastomer obtained by the present invention, there can be optionally mixed a variety of additives, for example, a thermal stabilizer, a crosslinking agent, an ultraviolet ray absorbent, or inorganic fillers such as silica, talc, and carbon, and softeners such as plasticizers and oils.

Also, the polyester elastomer of the present invention is excellent in a heat resistance, oil resistance, abrasion resistance, impact resistance, and hydrolysis resistance, and from which a composition is prepared solely or in combination with other resins, and it can be put to practical use as a variety of molded articles such as sheets, films, a variety of shaped molded articles by injection, and blow-molded articles.
Further, the polyester elastomer of the present invention or the composition therefrom can be employed as materials for parts for cars, large-sized machines, industrial machines, and home electric appliances such as hoses, tubes, belts, gears, connectors, tanks, parts for a battery, socket, covers for a code, and bumpers by molding solely or in combination with other resins.

### EXAMPLES OF THE THIRD ASPECT OF INVENTION

Hereinafter, although the present invention is specifically illustrated by Examples, the present invention is not limited by those.

### (Method for measurements and evaluations)

1. Melt viscosity: It is the same as in the first aspect of the invention.
2. Weight ratio of A/B: It is the same as in the first aspect of the invention.
3. Average chain length of A and average chain length of B: It is the same as in the first aspect of the invention.
4. Tensile strength, 50% Modulus (kg/cm²): JIS K7113
5. Fracture strength (kg/cm²): JIS K7113
6. Extension in fracture (%): JIS K7113
7. Melting point (°C): JIS K7121
8. Crystallization temperature (°C): JIS K7121
9. Hardness (Shore D): JIS K7215

### (Example 1)

There were fed a polyethylene terephthalate (manufactured by Teijin, melting point of 270°C) and a polycaprolactone (Placcel HIP) manufactured by Daicel Chemical Industries, Ltd., into an inlet for feeding of a twin-screw extruder having an average residence time of 10 minutes in a proportion of 6 kg/hour and 4 kg/hour, respectively. In the extruder, melt mixing was conducted at 280°C, and extruded strands were cooled by a dried air for cooling, followed by cutting with a pelletizer. The extruded strands were slightly opaque in a melting state. So, in order to further make proceed the reaction of the polyethylene terephthalate with the polycaprolactone, pellets obtained were melt mixed using the same extruder at 280°C for approximately 10 minutes. The extruded strands became transparent in a melting state. The strands were cooled by a dried air for cooling, followed by cutting with a pelletizer to obtain a pellet-state polyester elastomer (1).

### (Example 2)

There were fed pellets of the polyester elastomer (1) obtained in the Example 1 into an inlet for feeding of a twin-screw extruder having an average residence time of 5 minutes in a proportion of 1.5 kg/hour with a fixed-volume feeder.
Simultaneously, there was fed hexamethylene diisocyanate which is an isocyanate compound into an inlet for feeding of the same extruder in 0.3 kg/hour with a fixed-volume pump to melt mix at 280°C. As described above, there was carried out a chain extension of the polyester elastomer (1) to obtain a polyester elastomer (2). Table 1-3 shows physical properties and mechanical properties in the polyester elastomers (1) and (2) obtained in the Examples 1 and 2.

**Table 1-3**

| | Example 1 | Example 2 |
|---|---|---|
| Melt viscosity | 2,700 | 14,900 |
| A/B (weight ratio) | 60/40 | 60/40 |
| Average length of a block chain in A | 3,400 | 3,200 |
| Average length of a block chain in B | 2,500 | 2,100 |
| 50% Modulus (kg/cm²) | 60 | 60 |
| Fracture strength (kg/cm²) | 280 | 390 |
| Extension in fracture (%) | 480 | 700 |
| Melting point (°C) | 216 | 212 |
| Crystallization temperature (°C) | 109 | 105 |
| Hardness (Shore D) | 34 | 33 |

### POSSIBILITY OF UTILIZATION IN INDUSTRY BY THE THIRD ASPECT OF THE INVENTION

As described hereinabove, the polyester elastomer of the present invention, in which hydrolysis resistance is improved, has an excellent heat resistance, oil resistance, abrasion resistance, and impact resistance. The elastomer alone and a composition therefrom are employed solely or in combination with other resins, and those can be put to practical use as a variety of molded articles such as sheets, films, a variety of molded articles by injection, and blow-molded articles.

### TECHNICAL FIELD OF FOURTH ASPECT OF THE INVENTION

The present invention relates to a process for the preparation of a polyester elastomer. In more detail, it relates to a process for the preparation of a polyester elastomer which is excellent in a heat resistance and rigidity, from an aromatic polyester, an aliphatic polyester which have a specified molecular weight, and a dibasic acid or an anhydride thereof.

### BACKGROUND ART OF THE FOURTH ASPECT OF THE INVENTION

There has been known a polyester elastomer in which there is employed an aromatic polyester since a long time ago. In JP-B-73004115, JP-B-73004116, and JP-B-77049037 Official Gazettes, there are disclosed a process for the preparation of a polyester elastomer by a ring-opening addition polymerization of lactones (in all Examples, lactone monomers) with an aromatic polyester (molecular weight of 500-not less than 8000), and then simultaneously carrying out a polycondensation and an esterification reaction in an identical reaction system, and a process for the preparation of a polyester elastomer by allowing to react a polyfunctional acylation agent. Further, in JP-A-05043666, JP-A-05059192, and JP-A-05116263 Official Gazettes, there are disclosed a process for the preparation of a polyester elastomer by mixing and allowing to react an aromatic polyester (relative viscosity of 1.52) and a lactone monomer with an extruder.
Although the polyester elastomers obtained by the processes in which the lactone monomers are employed are excellent in elasticity and ductility, since it is insufficient in heat resistance and rigidity, it is occasionally difficult to employ depending upon uses.

### DISCLOSURE OF THE FOURTH ASPECT OF THE INVENTION

The present invention provides a process for the preparation of a polyester elastomer in which not only elasticity and ductility, but also heat resistance and rigidity are improved.

In the case of a reaction of an aromatic polyester resin with a lactone monomer, although there simultaneously proceed a ring-opening addition polymerization, an esterification reaction, and a polycondensation, there predominantly proceed the ring-opening addition polymerization and the esterification reaction.
Accordingly, there become both short a chain length of an aromatic polyester segment and a chain length of a polylactone segment in a polyester elastomer produced, whereby, as physical properties of elastomers, although elasticity and ductility become excellent, heat resistance and rigidity become insufficient.
The present inventors, as a result of an intensive investigation for solving the above-described problems, have found that the problems can be solved by a process for the preparation in which there is carried out a condensation reaction of a specified proportion of an aromatic polyester resin (A) having a specified molecular weight range and an aliphatic polyester resin (B) having a specified molecular weight range with an optional necessary amount of a dibasic acid (C) or an anhydride thereof in a melting state, and the present invention has been completed. That is, the present invention provides a process for the preparation, in which an esterification reaction is suppressed, of a polyester elastomer having a long segment chain which is excellent in a heat resistance and rigidity by carrying out a condensation reaction (polycondensation) in a melting state 30-95% by weight of an aromatic polyester resin (A) having a number average molecular weight of 1,000-60,000 and 70-5% by weight of an aliphatic polyester resin (B) having a number average molecular weight of 1,000-40,000 with 0-10 parts by weight of a dibasic acid (C) or an anhydride thereof based on 100 parts by weight of the total amount of the (A) and (B).

### BEST MODE FOR CARRYING OUT THE FOURTH ASPECT OF THE INVENTION

Hereinafter, the present invention is illustrated in detail.
The aromatic polyester resin (A) to be employed in the present invention is an aromatic polyester resin which is obtained by a polycondensation of an aromatic dibasic acid which includes a dicarboxylic acid having a benzene ring such as terephthalic acid and isophthalic acid, a dicarboxylic acid having a naphthalene ring such as naphthalene-1,5-dicarboxylic acid and naphthalene-2,6-dicarboxylic acid, and derivatives thereof capable of forming an ester, or an ester thereof with a variety of glycols such as diol which includes aliphatic glycols such as ethyleneglycol, trimethyleneglycol, 1,4-butanediol, hexamethyleneglycol, diethyleneglycol, and cyclohexanediol, or an aromatic diol such as 1,4-bis(2-oxyethoxy)benzene and bisphenol A, or derivatives thereof capable of forming an ester, a polycondensation of an aromatic carboxylic acid having hydroxyl group, and a polycondensation of a diphenol compound with a halogenated dibasic acid, and the like. Particularly, there is preferably employed a polycondensate of terephthalic acid or naphthalene dicarboxylic acids with a variety of glycols. These have hydroxyl groups or carboxylic groups as terminal functional groups.

The above-described aromatic polyester resin (A) has a number average molecular weight ranging in 1,000-60,000, preferably 10,000-40,000 and, particularly, more preferably 20,000-30,000. In the case that the number average molecular weight is less than 1,000, there unpreferably lower a heat resistance and rigidity in a polyester elastomer produced and, in the case of exceeding 60,000, there becomes excessively low the concentration of terminal functional groups, unpreferably resulting in that the condensation reaction does not readily proceed.

The aliphatic polyester resin (B) to be employed in the present invention is a resin obtained by a ring-opening polymerization of lactones such as valerolactone, caprolactone, and laurolactone, or a polycondensation of a carboxylic acid having hydroxyl group, or a polycondensation of a dibasic acid (ester) with the above-described variety of glycols and, particularly, there are preferably employed polycaprolactones and a variety of polyadipates. There is preferred a resin having hydroxyl groups of not less than 90%, and preferably not less than 98% as the terminal functional groups in the aliphatic polyester resin (B), from a viewpoint of readily causing the polycondensation with the aromatic polyester resin (A). As an example, in the case of citing a resin obtained by the ring-opening polymerization of lactones, such the resin is readily obtained by employing glycols as initiators.

The aliphatic polyester resin (B) has a number average molecular weight ranging in 1,000-40,000, preferably 2,000-20,000 and, particularly, more preferably 5,000-10,000. In the case that the number average molecular weight is less than 1,000, there unpreferably lower a heat resistance and rigidity in a polyester elastomer produced and, in the case of exceeding 40,000, there becomes excessively lower the concentration of terminal functional groups, unpreferably resulting in that the condensation reaction does not readily proceed.

As the dibasic acid (C) or an acid anhydride thereof to be employed in the present invention, there can be enumerated oxalic acid, succinic acid, adipic acid, terephthalic acid, isophthalic acid, naphthalene dicarboxylic acids, and acid anhydrides thereof capable of existing. In the present invention, the addition of the dibasic acid (C) or an acid anhydride thereof is effective for adjusting the concentration of terminal hydroxyl groups and the concentration of terminal hydroxyl groups.
The addition amount ranges in 0-10 parts by weight, and preferably 0.1-5 parts by weight based on 100 parts by weight of the total amount of the aromatic polyester resin (A) and the aliphatic polyester resin (B).

In the present invention, as the terminal functional groups in the aromatic polyester resin (A) and the aliphatic polyester resin (B), there are enumerated functional groups capable of carrying out the condensation reaction, for example, hydroxyl group, carboxyl group, ester group, and phenolic hydroxyl group.
Of those, there is preferred a combination of hydroxyl groups with carboxyl groups.

In the preparation of the polyester elastomer, as the mixing proportion of the aromatic polyester resin (A) with respect to the aliphatic polyester resin (B), the (A) ranges in 30-95% by weight (total of the (A) and the (B) is 100% by weight), preferably 40-80% by weight, and more preferably 60-70% by weight. In the case that the (A) is less than 30% by weight, there unpreferably lower rigidity, heat resistance, and oil resistance in a polyester elastomer produced. Further, in the case of exceeding 95% by weight, there unpreferably lower impact resistance and elasticity in a polyester elastomer produced.

In the present invention, it is important to adjust the kind of the total terminal functional groups in the aromatic polyester resin (A), the aliphatic polyester resin (B), and the dibasic acid (C) or an acid anhydride thereof in a sense of controlling a molecular weight of an elastomer produced. The proportion of the mol amount (X) of (carboxyl groups + ester groups) with respect to the mol amount (Y) of (hydroxyl groups + phenolic hydroxyl groups) in the case of feeding, that is, the (X)/(Y) is preferred in a ratio of 0.8/1-1.2/1, whereby, a molecular weight of an elastomer produced can be preferably adjusted to a higher value. By the way, although there is not particularly limited a number average molecular weight of the polyester elastomer obtained in the present invention, it preferably ranges in 40,000-300,000 from a viewpoint of rigidity and heat resistance.

Further, the terminal functional groups in the polyester elastomer produced can be also finally terminated by a reaction in order to suppress an esterification reaction and a hydrolysis reaction. In the case of carboxyl groups, there is usually carried out an amide-termination by carboxydiimide, or a secondary (or a primary) hydroxyl group-termination by an epoxy compound. Also in the case of hydroxyl groups, those can be terminated by a coupling reaction with an isocyanate and epoxy compound.

Reaction temperature desirably ranges from a melting point of the aromatic polyester resin (A) which is a raw material to 300°C. In the case of exceeding 300°C, there are caused an esterification reaction and a depolymerization reaction, and a decline of strength and discoloration are unpreferably caused.
Reaction (condensation reaction) period of time is preferably from 10 minute to 2 hours, more preferably from 20 minute to 1 hour. In the case of less than 10 minutes, reaction is insufficient, resulting in that rigidness and elasticity are lower. Further, in the case of exceeding 2 hours, there proceed an esterification reaction and a depolymerization reaction, and a decline of strength and discoloration are unpreferably caused.

In order to sufficiently allow to proceed the condensation reaction, water or glycols are preferably removed at reduced pressures. It is desirable to adjust to a range of preferably 0.1-10 torr, and more preferably 0.2-2 torr.

Also, in order to accelerate the condensation reaction accompanied by dehydration in the present invention, there are preferably employed catalysts for a condensation reaction accompanied by dehydration. As the catalysts to be employed, there are enumerated tin-based catalysts, titanium-based catalysts, and zirconium-based catalysts, and the like. Of those, there are preferred stannous chloride and monobutyltin tris(2-ethylhexanate) in view of a large reaction rate. Addition proportion of the catalysts ranges in 1-5000 ppm, preferably 10-100 ppm, and more preferably 20-50 ppm based on a polyester elastomer produced. In the case of less than 1 ppm, there is not shown an effect as the catalysts. Further, in the case of exceeding 5000 ppm, there proceed an esterification reaction and a depolymerization reaction, and a decline of strength and discoloration are unpreferably caused.

As apparatuses for the preparation, there is preferably employed a continuous apparatus equipped with a dehydration equipment. Otherwise, even in a batchwise apparatus, there is preferably employed a reaction vessel having shallow depth, a wide evaporation area, and high agitation efficiency for elevating efficiency in removal of water.
As specific examples of the continuous apparatus, there are enumerated continuous apparatus such as a static mixer not equipped with movable agitation parts, a vertical type reactor equipped with a screw, a thin-layer evaporator type reactor, a ventilation-type single or twin screw extruder having a structure capable of streaming a heating medium through a screw.
Condensation reaction can be continuously carried out by the apparatus alone or combined apparatuses in combination with a degassing equipment at reduced pressures.

In the polyester elastomer obtained by the process of the present invention, there can be optionally mixed a variety of additives, for example, a heat stabilizer, a crosslinking agent, an ultraviolet ray absorbent, or inorganic fillers such as silica, talc, and carbon, and softeners such as plasticizers and oils.
The polyester elastomer obtained by the process of the present invention can be put to practical use as a variety of molded articles such as sheets, films, a variety of molded articles by injection, and blow-molded articles. Further, it can be employed as materials for parts for cars, large-sized machines, industrial machines, home electric appliances, and toys which include hoses, tubes, belts, gears, connectors, tanks, parts for a battery, socket, covers for a code, and bumpers by molding solely or in combination with other resins.

### EXAMPLES OF THE FOURTH ASPECT OF INVENTION

Hereinafter, although the present invention is specifically illustrated by Examples, the present invention is not limited by those.

### (Method for evaluations)

1. Average molecular weight and Mw/Mn: It is the same as in the first aspect of the invention.
2. Melt viscosity: It is the same as in the first aspect of the invention.
3. PBT/PCL weight ratio: It is the same as in the first aspect of the invention.
4. Average chain length of PBT, average chain length of the PCL (unit): It is the same as in the first aspect of the invention.
5. Tensile strength, 50% Modulus (kg/cm²): JIS K7113
6. Fracture strength (kg/cm²): JIS K7113
7. Extension in fracture (%): JIS K7113

### (Example 1)

A batchwise style reaction vessel having capacity of 20 liter equipped with an agitator, a tube for supplying nitrogen, and an equipment for reducing pressure was charged with 12 kg of a polybutylene terephthalate having a number average molecular weight of 19,000 (Duranate 400FP manufactured by Polyplastics, Ltd.) which is an aromatic polyester resin (A), 8 kg of a polycaprolactone having a number average molecular weight of 10,000 (Placcel HIP manufactured by Daicel Chemical, Ltd.) which is an aliphatic polyester resin (B), 0.21 kg of phthalic anhydride, and 2 g of monobutyltin tris(2-ethylhexanate) which is a catalyst for a condensation reaction accompanied by dehydration. Inside of the reaction vessel was sufficiently replaced with nitrogen, followed by melting while streaming nitrogen and heating at 230°C.
While maintaining the temperature at 230°C, pressure was reduced to 100 torr in a state of streaming nitrogen, followed by mixing while agitating for 20 minutes. After mixed, the reduced pressure was released, followed by giving pressure of 2 atmospheres and by preparing pellets with a pelletizer while cooling strands through a water tank. The pellets obtained were dried at 160°C for 2 hours under streaming nitrogen to obtain a polyester elastomer.
Table 1-4 shows an average molecular weight measured by a GPC, melt viscosity, a weight ratio of PBT/PCL, an average chain length of a PBT segment, and an average chain length of a PCL segment, a melting point, crystallization temperature, and results of tensile tests.

### (Example 2)

Dried pellets obtained in the Example 1 was fed into an inlet for feeding of a twin-screw extruder equipped with a degassing equipment having an average residence time of 10 minutes to carry out a condensation reaction accompanied by dehydration under the conditions of 220°C and 0.5 torr. Pellets obtained were dried at 160°C for 2 hours under nitrogen atmosphere to obtain a polyester elastomer. Table 1-4 shows evaluation results of physical properties.

### (Comparative Example 1)

The same batchwise style reaction vessel having capacity of 20 liter was charged as in the Example 1 with 12 kg of a polybutylene terephthalate having a number average molecular weight of 19,000 (Duranate 400FP manufactured by Polyplastics, Ltd.) which is a crystalline aromatic polyester resin (A), 8 kg of ε-caprolactone monomer. Inside of the reaction vessel was sufficiently replaced with nitrogen, followed by melting while heating at 230°C. Mixing and agitation were carried out for 90 minutes while maintaining the temperature at 230°C in order to carried out a ring-opening polymerization of e-caprolactone monomer and an esterification reaction. Further, agitation and mixing were conducted at the reduced pressure of 10 torr for 30 minutes after gradually reducing pressure in a state of streaming nitrogen to prepare a polyester elastomer. Physical properties of the elastomer were also likewise measured as in the Example 1 after pelletized. Table 1-4 shows results obtained.

### (Comparative Example 2)

The same operations were likewise followed as in the Comparative Example 1 except that there was employed a polybutylene terephthalate having a number average molecular weight of 41,000 (Duranate 800FP manufactured by Polyplastics, Ltd.) which is a crystalline aromatic polyester resin (A).
Physical properties of the elastomer were also likewise measured as in the Example 1 after pelletized. Table 1-4 shows results obtained.

**Table 1-4**

| Measured items | Example | | Comparative Example | |
|---|---|---|---|---|
| | 1 | 2 | 1 | 2 |
| Number average molecular weight (Mn) | 40,000 | 71,000 | 23,000 | 53,000 |
| Mw/Mn | 2.45 | 2.64 | 2.13 | 2.70 |
| Melt viscosity (poise) | 4,810 | 8,260 | 480 | 5,330 |
| PBT/PCL (weight ratio) | 59/41 | 59/41 | 61/39 | 61/39 |
| Average length of chain in PBT block | 10,000 | 9,300 | 1,600 | 1,300 |
| Average length of chain in PCL block | 4,200 | 3,900 | 1,300 | 1,000 |
| 50% Modulus (kg/cm²) | 160 | 150 | 160 | 150 |
| Fracture strength (kg/cm²) | 320 | 470 | 170 | 350 |
| Extension in fracture (%) | 530 | 850 | 380 | 690 |
| Melting point (°C) | 219 | 216 | 207 | 206 |
| Crystallization temperature (°C) | 158 | 156 | 151 | 145 |

### POSSIBILITY OF UTILIZATION IN INDUSTRY BY THE FOURTH ASPECT OF THE INVENTION

By the process for the preparation of the present invention, an esterification reaction is controlled, and a condensation reaction is efficiently carried out. As a result, there can be obtained a polyester elastomer having an excellent heat resistance and rigidity.

### TECHNICAL FIELD OF FIFTH ASPECT OF THE INVENTION

The present invention relates to a polyester elastomer composition having an excellent hydrolysis resistance (a thermally aging resistance). In more detail, it relates to a polyester elastomer composition which is excellent in a heat resistance, oil resistance, abrasion resistance, impact resistance, and hydrolysis resistance, and which can be preferably employed as parts for cars, large-sized machines, machines for industries, and home electric appliances, and the like, such as hoses, tubes, belts, gears, connectors, tanks, parts for a battery, socket, covers for a code, and bumpers.

### BACKGROUND ART OF THE FIFTH ASPECT OF THE INVENTION

There can be enumerated the same background art as in the third aspect of the invention, and there has been desired a further drastic improvement regarding hydrolysis resistance in a polyester elastomer.

### DISCLOSURE OF THE FIFTH ASPECT OF THE INVENTION

The present invention aims at providing a polyester elastomer composition in which there is improved hydrolysis resistance in a polyester elastomer, and which is excellent in a heat resistance, oil resistance, abrasion resistance, and impact resistance.

The present inventors have found that there can be obtained a polyester elastomer composition which is excellent in a heat resistance, oil resistance, abrasion resistance, and impact resistance by mixing a polyester elastomer (A) with a specified amount of an epoxy-modified polymer (B), and the present invention has been completed.

That is, the present invention provides a polyester elastomer composition which comprises 30-90% by weight of a polyester elastomer (A) and 70-10% by weight (total of both is 100% by weight) of an epoxy-modified polymer (B). Further, there are provided a polyester elastomer composition in which the polyester elastomer (A) contains a polybutylene terephthalate as a hard segment, and at least one kind selected from the group consisting of an aliphatic polyester, polyether, and polycarbonate as a soft segment, and a polyester elastomer composition in which the aliphatic polyester composing the soft segment is a polycaprolactone component.
Still further, there is provided a polyester elastomer composition in which the epoxy-modified polymer (B) is an epoxidized (partially hydrogenated) block copolymer, or a glycidyl(meth)acrylate-modified (graft-modified) or copolymerized polyethylene. It is to be noted that the "(partially hydrogenated) block copolymer" means a block copolymer or a partially hydrogenated block copolymer.

### BEST MODE FOR CARRYING OUT THE FIFTH ASPECT OF THE INVENTION

Hereinafter, the present invention is illustrated in detail.
The polyester elastomer (A) to be employed in the present invention is a polyester elastomer in which the hard segment is an aromatic polyester having a melting point of 200-300°C such as a polybutylene terephthalate, a polyethylene terephthalate, and a polyethylene naphthalate, and the soft segment is at least one kind selected from the group consisting of an aliphatic polyester, polyether, and polycarbonate.

As the soft segment, there can be enumerated an aliphatic polyester typified by a polylactone, a condensate of an aliphatic dibasic acid with a glycol, and a condensate of a variety of hydroxyalkyl carboxylic acids. As specific examples of those, there can be exemplified a polycaprolactone, a caprolactone-based copolymer, a condensate of adipic acid with ethyleneglycol, 1,4-butanediol, and neopentylglycol, and the like, a condensate of sebasic acid or succinic acid with the above-described glycols. There are also included a cocondensate of themselves and a cocondensate with not more than 30% by weight of an aromatic polyester resin. Although the polycaprolactone and the adipic acid-based polyester are usually employed, the polycaprolactone is preferred in view of a heat resistance, durability, and ductility.
The polyether which is a soft segment is a polymer of a cyclic ether and a condensate of a glycol, and further, it also includes a copolymer with a caprolactone. As specific examples of those, there can be exemplified a polytetramethylene glycol, a polyethylene glycol, and a polypropylene glycol, and the like.
Of those, in usual, the polytetramethylene glycol (a polytetramethylene ether glycol) is preferably employed.
Further, the polycarbonate which is a soft segment is a polymer of a cyclic carbonate and a condensate of a polyvalent phenol and/or glycol with phosgene or diphenyl carbonate and, it also includes a copolymer with caprolactone. As specific examples, there can be exemplified a polydimethyltrimethylene carbonate, a polymonomethyl trimethylene carbonate, a polytrimethylene carbonate, and a polyhexamethylene carbonate, and the like.

In the polyester elastomer (A) to be employed in the present invention, as a composing proportion of the hard segment with the soft segment, the content of the hard segment ranges in 50-90% by weight, preferably in 60-80% by weight. In the case that the content of the hard segment is less than 50% by weight, there unpreferably lower heat resistance and oil resistance. Further, in the case of exceeding 90% by weight, impact resistance unpreferably lowers.

Molecular weight in the polyester elastomer (A) to be employed in the present invention can be calculated by measuring an intrinsic viscosity and a GPC method. As a number average molecular weight based on a standard Polystyrene calculated by measuring with a usual GPC in which there is employed chloroform/hexafluoro isopropanol (hereinafter, referred to as HFIP)=9/1 (volume ratio) as solvents, there is preferred 40,000-200,000, more preferably 40,000-150,000 in view of a well-balanced impact resistance and molding processability.

Proportion of the polyester elastomer (A) is 30-90% by weight, preferably in 50-80% by weight, and more preferably in 60-70% by weight in the polyester elastomer composition {(A)+(B)} of the present invention. In the case of less than 30% by weight, there unpreferably lower a heat resistance, oil resistance, abrasion resistance, and rigidity in the polyester elastomer composition. In the case of exceeding 90% by weight, there is unpreferably small an effect for improving hydrolysis resistance.
The epoxy-modified polymer (B) to be employed in the present invention, if it has at least one epoxy group in the identical molecule, is not particularly limited. There can be employed (1) a polymer having a carbon-carbon double bond, for example, an epoxidized polymer in which there are epoxidized an SBS (a styrene-butadiene-styrene block copolymer), an SIS (a styrene-isoprene-styrene block copolymer), an SBR (a styrene-butadiene copolymer), an MBR [a methyl(meth)acrylate-butadiene copolymer], a polybutadiene, a polyisoprene, and a partially-hydrogenated polymer thereof with hydrogen peroxide, peracetic acid, or other peracids, preferably, an epoxidized partially-hydrogenated block copolymer, (2) glycidylmethacrylate (hereinafter, referred to as GMA), a polymer in which a monomer such as glycidylacrylate is copolymerized with ethylene or styrene, and (3) a polymer (for example, a polyethylene, an SBS, a polyphenylene ether, and the like) in which a monomer such as the above-described GMA is graft-modified or graft-copolymerized at a polymer main chain by a radical initiator or an active energy ray.
Of those, there are preferred an epoxy-modified SBS ("Epofriend AT001" manufactured by Daicel Chemical Industries, Ltd.), a GMA-modified or a copolymerized polyethylene ("Bondfast" manufactured by Sumitomo Kagaku Kogyo, Ltd.), and a copolymer of GMA with MMA (methylmethacrylate), and the like, in view of obtaining a polyester elastomer composition which is excellent in all physical properties.

In order to obtain the polyester elastomer composition of the present invention, there can be employed publicly-known means. For example, a fixed amount of respective components are premixed with a mixer such as a Henshel mixer, a tumbler mixer, and a kneader, and then, those are kneaded by an extruder, otherwise, those are melt-kneaded with a heated roll or a Banbury mixer, and then the composition can be obtained by pelletizing or crushing. It is to be noted that there may be optionally mixed a variety of additives, for example, fillers, lubricants, reinforcing materials, stabilizers, weatherability stabilizers, ultraviolet ray absorbents, plasticizers, anti-static agents, color hue improvers, and the like, within a scope in which an effect is not obstructed in the present invention.

The polyester elastomer composition of the present invention is excellent in a heat resistance, oil resistance, abrasion resistance, impact resistance, and hydrolysis resistance, and it can be put to practical use as materials for parts for cars, large-sized machines, industrial machines, and home electric appliances which include hoses, tubes, belts, gears, connectors, tanks, parts for a battery, socket, covers for a code, and bumpers by molding solely or in combination with other resins.

### EXAMPLES OF THE FIFTH ASPECT OF INVENTION

Hereinafter, although the present invention is specifically illustrated by Examples, the present invention is not limited by those.

Evaluations were conducted according to following methods.
50% Modulus: JIS K7113
Fracture strength: JIS K7113
Extension in fracture: JIS K7113
Notched Izod Impact Strength: JIS K7110
Immersion test in gasoline: Test pieces were immersed in gasoline at room temperatures for 1 day, and then it was measured according to JIS K7113 (tensile test).
Boiling water test: Test pieces were immersed in heated water of 95°C for 5 days, and then it was measured according to JIS K7113 (tensile test).

### (Synthesis Example 1: Synthesis of a polyester elastomer (A-1) having polycaprolactone segments)

A batchwise style reaction vessel having capacity of 20 liter equipped with an agitator, a tube for supplying nitrogen, and an equipment for reducing pressure was charged with 12 kg of a polybutylene terephthalate having a number average molecular weight of 41,000 (Duranate 800FP manufactured by Polyplastics, Ltd.) which is a crystalline aromatic polyester resin, 8 kg of e-caprolactone monomer. Inside of the reaction vessel was replaced with nitrogen, followed by melting and heating at 230°C.
While maintaining the temperature at 230°C, mixing and agitation were carried out for 90 minutes to allow to proceed a ring opening polymerization of ε-caprolactone monomer and an esterification reaction. Further, pressure was gradually reduced to 10 torr in a state of streaming nitrogen, followed by mixing while agitating for 30 minutes at reduced pressures. After mixed, the reduced pressure was released, followed by giving pressure of 2 atmospheres and by preparing pellets with a pelletizer while cooling strands through a water vessel. The pellets obtained were dried at 160°C for 2 hours under streaming nitrogen to obtain a polyester elastomer (A-1) having polycaprolactone segments.

### (Synthesis Example 2: Synthesis of a polyester elastomer (A-2) having polycarbonate segments)

The same reactions were followed as in the Synthesis Example 1 for the (A-1), except that 6.4 kg of ε-caprolactone monomer and 1.6 kg of 4,4-dimethyltrimethylene carbonate were employed instead of 8 kg of ε-caprolactone monomer, and reaction period was changed to 150 minutes to obtain a polyester elastomer (A-2) having polycarbonate segments.

### (Epoxy-modified polymer (B))

### (Synthesis Example 3: Synthesis of an epoxidized SBS (B-1))

A jacketed reaction vessel equipped with an agitator, a reflux condenser, and a thermometer was charged with 300 g of styrene-butadiene-styrene block copolymer [a trade name of TR2000 manufactured by Japan Synthetic Rubber, Ltd.] and 1500 g of ethyl acetate, followed by being dissolved. Successively, 169 g of ethyl acetate solution having 30% by weight of peracetic acid was continuously added dropwise, followed by carrying out an epoxidation reaction while stirring at 40°C for 3 hours. The reactant liquid was cooled to ordinary temperatures, followed by being taken out of the reaction vessel. Successively, a large amount of methanol was added to precipitate a polymer, and then, polymer was washed by water after filtered, followed by being dried to obtain an epoxy-modified polymer. The epoxy-modified polymer obtained was designated as (B-1). An epoxy equivalent in the polymer was 470 g/eq.
B-2: a GMA-modified or a copolymerized polyethylene ("Bondfast" manufactured by Sumitomo Kagaku Kogyo, Ltd.)
B-3: a GMA-MMA copolymer (GMA 8%, Mn=47,000)

### (Synthesis Example 4: Synthesis of an epoxidized partially hydrogenated SBS (B-4))

A jacketed reaction vessel equipped with an agitator and a thermometer was charged with 300 g of styrene-butadiene-styrene block copolymer [a trade name of TR2000 manufactured by Japan Synthetic Rubber, Ltd.] and 3000 g of cyclohexane, followed by being dissolved. Successively, there were added 40 ml of a cyclohexane solution (the concentration of 1 millimole/liter) of di-p-tollylbis(1-cyclopentadienyl)titanium and 8 ml of n-butyllithium solution (the concentration of millimole/liter) at 0°C and hydrogen pressure of 2.0 kg/cm², followed by allowing to react at hydrogen partial pressure of 2.5 kg/cm² for 30 minutes.
Solvent was removed from a partially hydrogenated-copolymer solution by drying at reduced pressure. The hydrogenation ratio was 30% in the total parts of butadiene. 300 g of the partially hydrogenated-polymer was dissolved in 1500 g of cyclohexane.
Subsequently, 300 g of ethyl acetate solution containing 30% by weight of peracetic acid was continuously added dropwise, followed by epoxidizing while stirring at 40°C for 3 hours. The reaction liquid was cooled to ordinary temperatures, followed by being taken out of the reaction vessel. Successively, a large amount of methanol was added to precipitate a polymer, and then it was washed by water after filtered, followed by being dried to obtain an epoxy-modified polymer. The epoxy-modified polymer obtained was designated as (B-4). An epoxy equivalent in the polymer was 275 g/eq.
B-5: an epoxidized polybutadiene ("Epolead PB3600" manufactured by Daicel Chemical Industries, Ltd., oxirane oxygen concentration of 8.0%, an epoxy equivalent of 200 g/eq), which has hydroxyl groups at terminals, and has hydroxyl groups also in the molecule.

### (Examples 1-8)

According to mixing proportion as described in Table 1-5, pellets of the respective resins were mixed in a tumbler, followed by melt kneading at 240°C using a 30 mmφ twin screw extruder, and by cutting strands extruded using a pelletizer after cooling in a water vessel.
The pellets obtained were dried at 110°C for 6 hours while streaming nitrogen. From the above-described pellets, test pieces for a tensile test and an Izod impact test were molded at 260°C with an injection molding machine.
According to JIS K7113, a tensile test was carried out, and a tensile test was carried out after immersed in gasoline and immersed in boiled water.
Likewise, according to JIS K7110, an Izod test was carried out and, according to JIS K7206, a Vicat softening point test was carried out, and results are described in Table 1-5.

### (Comparative Example 1)

Example 1 was likewise repeated except that mixing proportion was changed as described in Table 1-5. Results are described in Table 1-5. As shown in Table 1-5, results of the boiling tests are worse, and hydrolysis resistance is low.

### (Comparative Example 2)

Example 1 was likewise repeated except that mixing proportion was changed as described in Table 1-5. Results are described in Table 1-5. As shown in Table 1-5, results of immersion tests in gasoline are worse, and a Vicat softening point is low because of a too large content of the epoxy-modified polymer (B).

### (Comparative Example 3)

Example 1 was likewise repeated except that mixing proportion was changed as described in Table 1-5. Results are described in Table 1-5. As shown in Table 1-5, results of the boiling tests are worse, and hydrolysis resistance is low.

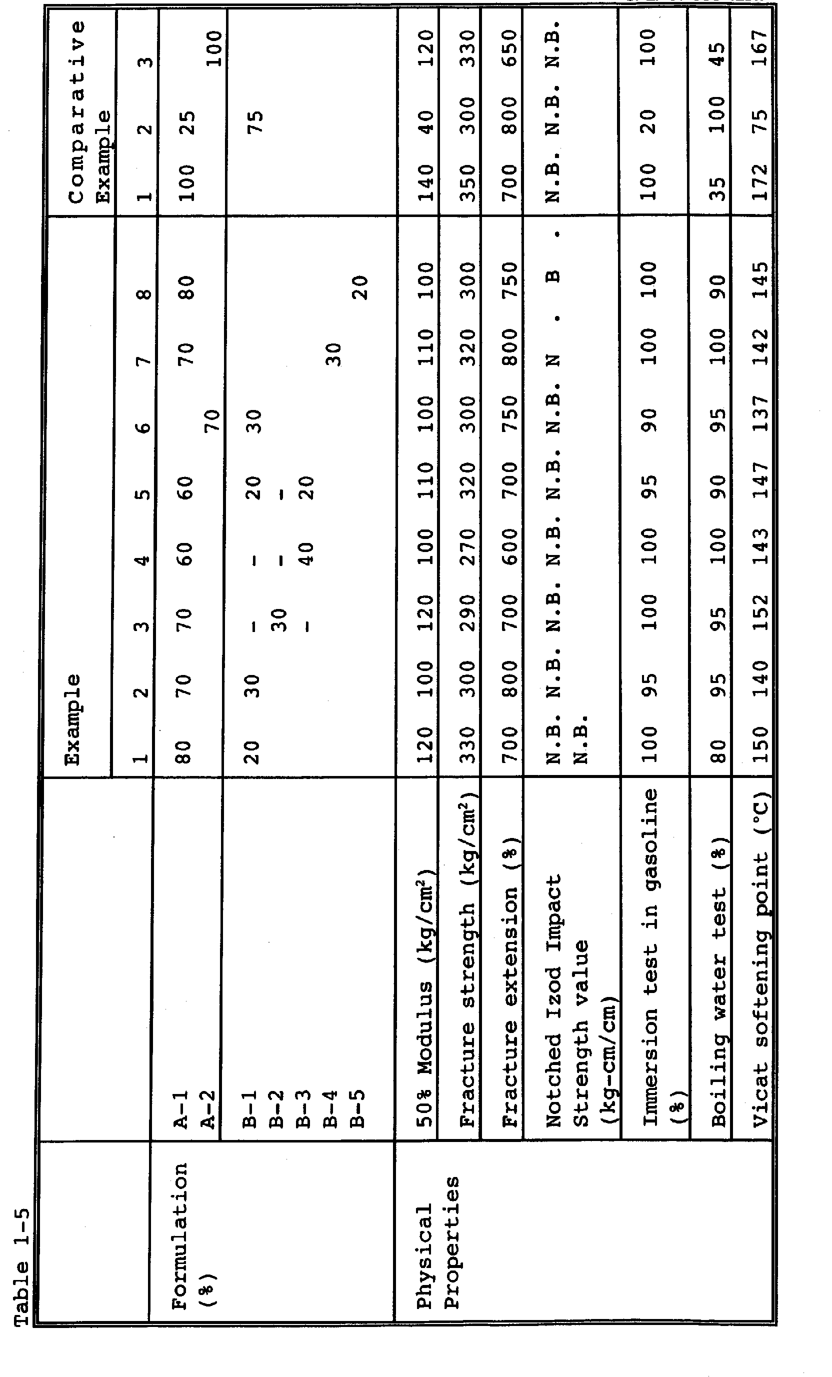

### POSSIBILITY OF UTILIZATION IN INDUSTRY BY THE FIFTH ASPECT OF THE INVENTION

The polyester elastomer composition of the present invention becomes a polyester elastomer composition which is excellent in a heat resistance, oil resistance and, above all, hydrolysis resistance by mixing the polyester elastomer (A) with a specified amount of the epoxy-modified polymer (B).

### TECHNICAL FIELD OF SIXTH ASPECT OF THE INVENTION

The present invention relates to molded articles which are basically transparent, and excellent in a variety of physical properties such as ductility, chemical resistance, weatherability, high processability, repellent elasticity, and coldness resistance, for example, fibers, films, sheets, sheet-molded articles, or bottles, and the like. In more detail, it relates to molded articles containing a specified elastic polyester as primary materials which are suitable for uses in fields such as films, sheets, or inside-mounting parts for cars and sheet-molded articles such as artificial leathers, and the like, in which there have been employed a plasticized polyvinyl chloride, a polyvinylidene chloride, a polyurethane, or a polyolefine-based elastomer, and in fields such as fibers, films, and bottles in which there has been employed a polyethylene terephthalate.

### BACKGROUND ART OF THE SIXTH ASPECT OF THE INVENTION

Since a plasticized polyvinyl chloride is transparent and excellent in ductility, and it is low in costs, it has been widely employed as films for agricultures or foamed sheets for constructions, or inside-mounting parts for cars by further molding such as vacuum molding and compression molding of sheets.
On the other hand, it is also well known that a polyethylene terephthalate is excellent in chemical resistance, weatherability, and heat resistance, and the like, and it is employed in fields such as fibers, wrapping films, and bottles.
Since there extends the function required for plastics molded articles, it has become insufficient by only a satisfaction in moldability, mechanical, optical, and electrical properties, or a variety of durabilities, and prices. For example, from a viewpoint of environmental issues, there is largely rising the importance in a shift to non-halogens and capability of recycling. Also in a field for fibers and films in which there has been employed a polyethylene terephthalate, requests from users extend, and there is also increasing uses in which there are further required ductility, processability, repellent elasticity, and coldness resistance.

### DISCLOSURE OF THE SIXTH ASPECT OF THE INVENTION

The present invention, in order to satisfy the above-described requests, aims at providing a molded article which is basically transparent, and excellent in ductility, chemical resistance, weatherability, high processability, repellent elasticity, and coldness resistance, for example, fibers, films, sheets, bottles, or sheet-molded articles.

The present inventors have found that the aim can be attained by a molded article containing an elastic polyester composed of an aromatic polyester which is a hard segment (A) primarily containing a polyethylene terephthalate or a polyethylene terenaphthalate, and at least one kind of a resin (B) selected from the group consisting of an aliphatic polyester, polycarbonate, and polyether which are a soft segment, and the present invention has been completed.

That is, the present invention provides a molded article which comprises containing an elastic polyester 30-95% by weight of an aromatic polyester resin which is a hard segment (A) primarily containing a polyethylene terephthalate or a polyethylene terenaphthalate, and 5-70% by weight of at least one kind of a resin (B) selected from the group consisting of an aliphatic polyester, polycarbonate, and polyether which are a soft segment. Further, there is provided a molded article which comprises containing the above-described elastic polyester, for example, fibers, films, sheets, and bottles. Still further, there is provided a sheet-molded article obtained by a vacuum molding and a compression molding of the above-described sheets.

### BEST MODE FOR CARRYING OUT THE SIXTH ASPECT OF THE INVENTION

Hereinafter, the present invention is illustrated in detail.
A number average molecular weight of the elastic polyester in the present invention ranges in 20,000-200,000, preferably 30,000-150,000, and more preferably 40,000-120,000. In the case that the molecular weight is less than 20,000, strength is insufficient in a variety of molded articles and, contrarily, in the case of exceeding 200,000, moldability unpreferably lowers because of an excessively high melt viscosity.
The hard segment (A) which is a component in the elastic polyester is an aromatic polyester primarily containing a polyethylene terephthalate or a polyethylene terenaphthalate, and there is preferred an aromatic polyester containing not less than 90 wt% of any one of both. In the case that the aromatic polyester which is the hard segment (A) is polybutylene terephthalate or a polybutylene terenaphthalate, since crystallization rate is too quick in an elastic polyester obtained, there cannot be obtained films or sheets which are satisfied in transparency, ductility, and repellent elasticity.
As components other than those, there can be exemplified polyesters containing additional composing components such as isophthalic acid, phthalic acid, and succinic acid which are a dicarboxylic acid, and 1,4-butanediol, neopentylglycol, and 1,6-hexanediol which are a glycol component.

Average length of a block chain in the hard segment (A) is a value [a reference literature "Polymer Papers" vol. 49, No. 7, pp 561-568 (Jul. 1992); it is to be noted that the average length of a block chain means an average length of chains described in the literature, and it is calculated by the product of the average number of chains and molecular weight of the respective recurring units] calculated by ¹³C-NMR, and it preferably ranges in 500-10,000, more preferably 1,000-5,000, and most preferably 1,500-4,000. In the case that the molecular weight in the hard segment (A) is less than 500, there unpreferably largely lower a heat resistance, rigidity, and chemical resistance, and the like in the elastic polyester. Contrarily, in the case of exceeding 10,000, there unpreferably largely lower repellent elasticity, transparency, and ductility in the elastic polyester.

A soft segment (B) which is another component in the elastic polyester of the present invention is at least one kind of a resin selected from the group consisting of an aliphatic polyester, polycarbonate, and polyether which are a polymer primarily contains ester bonds and/or ether bonds. It has hydroxyl groups or carboxyl groups at terminals of the molecule.
As specific examples of the aliphatic polyester, there can be exemplified a polycaprolactone, a caprolactone-based copolymer, a condensate of adipic acid with ethyleneglycol, 1,4-butanediol, and neopentylglycol, and the like, a condensate of sebasic acid or succinic acid with the above-described glycols.
There are also included a copolymer of themselves and a cocondensate with not more than 30% by weight of an aromatic polyester resin. Although there are usually employed the polycaprolactone and the adipic acid-based polyester, the polycaprolactone is preferred in view of a heat resistance, durability, and ductility. The polycarbonate is a polymer of a cyclic carbonate, a condensate of a polyvalentphenol and/or a glycol with phosgene or diphenyl carbonate and, it also includes a copolymer with a caprolactone. As specific examples, there can be exemplified a polydimethyltrimethylene carbonate, a polymonomethyl trimethylene carbonate, a polytrimethylene carbonate, and a polyhexamethylene carbonate, and the like. The polyether is a polymer of a cyclic ether, and a condensate of a glycol, and further, it also includes a condensate with a caprolactone. As specific examples of those, there can be exemplified a polytetramethylene glycol, a polyethylene glycol, and a polypropylene glycol, and the like. Of those, in usual, the polytetramethylene glycol (a polytetramethylene ether glycol) can be preferably employed.

The average length of block chain of the soft segment (B) is a value calculated by ¹³C-NMR, and it preferably ranges in 1,000-10,000, more preferably 1,500-5,000, and most preferably 2,000-4,000. In the case that it is less than 1,000, there largely lower repellent elasticity and ductility in the elastic polyester and, in the case of exceeding 10,000, there occasionally unpreferably lower transparency, a heat resistance, and rigidity, and the like in the elastic polyester.

The weight ratio (hereinafter, referred to as (A)/(weight ratio) of the hard segment (A) with respect to the soft segment (B) is 30/70-95/5 by weight, preferably 50/50-0/20, more preferably 60/40-70/30. In the case that the hard segment (A) is less than 30% by weight, there unpreferably largely lower a heat resistance, rigidity, and chemical resistance, and the like in the elastic polyester. Contrarily, in the case of exceeding 95% by weight, there unpreferably largely lower repellent elasticity, ductility, and processability in the elastic polyester.

In the elastic polyester in the present invention, there is preferably employed an elastic polyester in which the soft segment (B) is a polycaprolactone, and which simultaneously has a variety of physical properties such as ductility, chemical resistance, weatherability, high processability, repellent elasticity, and coldness resistance in a high level. Of those, there is preferably applied the weight ratio (A)/(B) ranging in 50/50-90/10, and particularly 60/40-70/30.

In the present invention, a process for the preparation of the elastic polyester is not particularly limited, and it is generally classified into two.
There are (1) a method in which there are simultaneously carried out a ring-opening polymerization of a lactone monomer and an esterification reaction with the aromatic polyester (A) which is a hard segment, and (2) a method in which there is carried out a melt reaction (an esterification reaction, a polycondensation, and a coupling reaction, and the like) by adding the aromatic polyester (A), at least one kind resin which is the soft segment (B) selected from the group consisting of an aliphatic polyester, polycarbonate, and polyether having a molecular weight of 500-40,000, and optionally a coupling agent such as a dicarboxylic anhydride, a diepoxy compound, and a diisocyanate compound.
Of the above-described two methods, since the method (1) is usually carried out in a reaction temperature ranging in 250-300°C, depolymerization and thermal decomposition of lactone monomers are apt to be caused, and a molecular weight becomes lower in the hard segment (A) and the soft segment (B), unpreferably resulting in showing a tendency that there are deteriorated physical properties such as heat resistance, rigidity, chemical resistance, and repellent elasticity. There is preferred a method in which the method (2) is employed, there are employed at least one kind resins which is the soft segment (B) selected from the group consisting of an aliphatic polyester, polycarbonate, and polyether, and reactions are completed within a short time of period.

The molded article of the present invention which comprises containing an elastic polyester is characterized in that there is employed preferably the elastic polyester in not less than 50% by weight, more preferably not less than 70% by weight, and most preferably not less than 90% by weight based on raw material resins, and it is obtained by a molding method in which there are employed publicly-known technologies and publicly-known molding machines. Raw material resins other than the elastic polyester are not particularly limited, and there are enumerated an ethylene-vinyl acetate copolymer, a styrene-acrylonitrile copolymer, a styrene-acrylonitrile-butadiene copolymer, a polymethylmethacrylate, a polycarbonate, an SBS, an epoxy group-modified polymer, and a carboxyl group-modified polymer in addition to a plasticized polyvinyl chloride, a polyvinylidene chloride, a polyurethane, and a polyolefine-based elastomer.

In the molded article from an elastic polyester of the present invention, as components other than the raw materials, there can be appropriately mixed additives such as fillers, crystallization accelerators, a variety of stabilizers, fluidity improvers, lubricants, anti-static agents, pigments, and plasticizers.

The molded article of the present invention is preferably employed as uses in fields such as fibers, films, sheets, bottles, or inside-mounted parts for cars, and sheet-molded articles such as artificial leathers.

### EXAMPLES OF THE SIXTH ASPECT OF INVENTION

Hereinafter, although the present invention is specifically illustrated by Examples, the present invention is not limited by those.

### (Methods for measurements and evaluations)

1. Melt viscosity: It is the same as in the first aspect of the invention.
2. Transparency: It was evaluated whether a newspaper can be read or not, which was placed under piled five sheets having 27 cm x 25 cm x 1 mm in a room where there is set one of a 20 watt fluorescent lamp. It was evaluated as o; capable of reading, 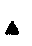 ; difficult to read, and x; opaque.
3. Chemical resistance (%): Retention ratio of fracture strength after immersed in toluene (24 hours, 23°C).
4. Tensile strength, 50% Modulus (kg/cm²): JIG K7113
5. Fracture strength (kg/cm²): JIS K7113
6. Extension in fracture (%): JIS K7113
7. Melting point (°C): JIS K7121
8. Crystallization temperature (°C): JIS K7121
9. Hardness (Shore D): JIS K7215

### (Preparation Example 1)

There were fed a polyethylene terephthalate and a polycaprolactone (Placcel HlP) manufactured by Daicel Chemical Industries, Ltd., into an inlet for feeding of a twin-screw extruder having an average residence time of 10 minutes in a proportion of 6 kg/hour and 4 kg/hour, respectively. In the extruder, melt mixing was conducted at 280°C, and extruded strands were cooled by a dried air for cooling, followed by cutting with a pelletizer. Since the extruded strands were slightly opaque in a melting state, melt mixing was carried out again at 280°C for approximately 10 minutes in order to allow to further proceed a reaction between the polyethylene terephthalate and the polycaprolactone. Extruded strands were transparent in a melting state. Those were cooled by a dried air for cooling, followed by cutting with a pelletizer to obtain an elastic polyester (1).

### (Preparation Example 2)

There were fed pellets of the elastic polyester (1) obtained in Preparation Example 1 into an inlet for feeding of a twin-screw extruder having an average residence time of 5 minutes in a proportion of 15 kg/hour with a fixed-volume feeder.
Simultaneously, there was fed hexamethylene diisocyanate which is an isocyanate compound into an inlet for feeding of the same extruder in a proportion of 0.3 kg/hour with a fixed-volume pump to melt mix at 280°C. As described above, there was carried out a chain-extension of the elastic polyester (1) to obtain an elastic polyester (2).

### (Preparation Examples 3 and 4)

Elastic polyesters (3) and (4) were obtained by carrying out the identical conditions except that the polyethylene terephthalate in the Preparation Examples 1 and 2 was changed to a polybutylene terephthalate.

### (Examples 1-4)

Pellets of the elastic polyester obtained in the Preparation Examples 1-4 were dried at 100°C for 10 hours. Respective 5 sheets having 27 cm x 25 cm x 1 mm were compression-molded using approximately 90 g of the pellets obtained under the following conditions.
(1) Pellets were heated at the temperature of 240°C and the pressure of 0 kg/cm² for 5 minutes. (2) Subsequently, those were heated at the temperature of 240°C and the pressure of 50 kg/cm² for 5 minutes. (3) Further, those were heated at the temperature of 40°C and the pressure of 150 kg/cm² for 5 minutes. (4) Sheets were taken out of a mold after cooled to 50°C by streaming water of the temperature of 20°C through a mold for cooling.

There were evaluated transparency, mechanical strength, hardness (in lamination of two sheets), and chemical resistance in the sheets obtained. Molded articles in the Preparation Example 1 were employed for Example 1, molded articles in the Preparation Example 2 were employed for Example 2, and molded articles in the Preparation Example 3 were employed for Comparative Example 1. Table 1-6 shows the evaluation results.
(hereinafter, this page is blank)

**Table 1-6**

| | Example | | Comparative Example | |
|---|---|---|---|---|
| | 1 | 2 | 1 | 2 |
| | P(1)*1 | P(2)*2 | P(3)*3 | P(4)*4 |
| | PET | PET | PBT | PBT |
| Melt viscosity (poise) | 2800 | 7200 | 4300 | 10900 |
| Transparency | o | o | x | x |
| Chemical resistance (%) | 100 | 100 | 100 | 100 |
| 50% Modulus (kg/cm²) | 50 | 50 | 160 | 160 |
| Fracture strength (kg/cm²) | 260 | 430 | 300 | 500 |
| Extension in fracture (%) | 460 | 580 | 650 | 640 |
| Melting point (°C) | 211 | 211 | 207 | 207 |
| Crystallization temperature (°C) | 114 | 114 | 151 | 151 |
| Hardness (Shore D) | 33 | 32 | 50 | 49 |

| | | | | |
|---|---|---|---|---|
| *1, *2, *3, *4: Elastic polyester prepared in Preparation Examples 1, 2, 3, and 4. | | | | |

### POSSIBILITY OF UTILIZATION IN INDUSTRY BY THE SIXTH ASPECT OF THE INVENTION

As described hereinabove, the molded article containing an elastic polyester provided by the present invention is excellent in transparency, and which has repellent elasticity and coldness resistance in addition to ductility, chemical resistance, and processability.

### TECHNICAL FIELD OF THE SEVENTH ASPECT OF THE INVENTION

The present invention relates to an aliphatic polyester elastomer having a low melting point, molding processability, ductility, and impact resistance. In more detail, it relates to an aliphatic polyester elastomer composed of a hard segment, a soft segment, and an aliphatic polyester, which has a low melting point, which is excellent in processability, and which is preferably employed as outside-mounting materials such as hoses, tubes, belts, gears, connectors, tanks, parts for a battery, socket, covers for a code, and bumpers, inside-mounting materials such as ceiling materials in parts for cars, and a process for the preparation thereof.

### BACKGROUND ART OF THE SEVENTH ASPECT OF THE INVENTION

A polyester elastomer, particularly, an elastomer containing an aromatic polyester which is a hard segment and an aliphatic polyester which is a soft segment, has been employed for parts in cars as an elastomer material which is excellent in heat resistance, oil resistance, weatherability, and abrasion resistance. However, it has not been employed as bumpers and inside-mounting materials in ceiling in which there are required molding processability, ductility, and impact resistance, and the like because of a high hardness.
In usual elastomers such as polyolefine-based one and polystyrene-based one, and the like, hardness can be controlled at low level by increasing a proportion of a soft segment. On the other hand, in the case of the above-mentioned polyester elastomer, when the proportion of the aliphatic polyester which is a soft segment exceeds 50 wt%, crystallization is caused in the soft segment, it was unable to lower hardness, and unable to improve an impact resistance.

### DISCLOSURE OF THE SEVENTH ASPECT OF THE INVENTION

The present invention aims at providing an aliphatic polyester elastomer which has a lower melting point, and which has molding processability, ductility, impact resistance, and biodegradability.

The present inventors, as a result of an intensive investigation in order to solve the problems, have found that the problems can be solved by an aliphatic polyester elastomer which comprises an aliphatic polyester in which a hard segment (A) and a soft segment (B) which construct a polyester elastomer are different from each other, and the present invention has been completed.

That is, the present invention provides an aliphatic polyester elastomer which comprises an aliphatic polyester in which a hard segment (A) and a soft segment (B) which construct a polyester elastomer are different from each other. The present invention provides, in addition to the aliphatic polyester elastomer of the above-described invention, an aliphatic polyester elastomer having the conditions in which the weight ratio (A/B) of the hard segment (A) with respect to the soft segment (B) ranges in 55/45-95/5, and a melting point ranges in 90-0°C. Further, there is provided, in addition to the above-described inventions, an aliphatic polyester elastomer which comprises a hard segment (A) having an average length in a block chain ranging in 1000-10,000, a soft segment (B) having an average length in a block chain ranging in 500-5,000, and a number average molecular weight ranging in 40,000-200,000.

The present invention provides an aliphatic polyester elastomer in which the above-described aliphatic polyester elastomer has an endothermic peak between 90°C and 200°C by a differential scanning calorimetric measurement (DSC).

Still further, the present invention provides a process for the preparation of the above-described aliphatic polyester elastomer characterized by allowing to react an aliphatic polyester which constructs a hard segment (A) with
an aliphatic polyester which constructs a soft segment (B) or a monomer which constructs the soft segment in a melting state. In addition, there is provided a process for the preparation of an aliphatic polyester elastomer in which a melting point of the aliphatic polyester which constructs the hard segment (A) ranges in 100-200°C and a melting point of the aliphatic polyester which constructs the soft segment (B) ranges in 40-80°C in the invention of the above-described process for the preparation.

### BEST MODE FOR CARRYING OUT THE SEVENTH ASPECT OF THE INVENTION

Hereinafter, the present invention is illustrated in detail.
The hard segment (A) in the aliphatic polyester elastomer of the present invention is an aliphatic polyester having a melting point ranging in preferably 100-200°C, more preferably 120-180°C, and there are enumerated a condensed polyester of an aliphatic dicarboxylic acid having a carbon number of 2-4 with a glycol having a carbon number of 2-4, a self-condensed polymer of a hydroxycarboxylic acid having a carbon number of 2-4, and a polymerized ester of glycolide and lactide, and the like. More specifically, there are exemplified a polybutylene succinate, a poly(3-hydroxybutylate), and a poly lactic acid, and the like.

An average length in a block chain of the hard segment i s preferably 1,000-10,000, and more preferably 2,000-5,000 in the aliphatic polyester elastomer of the present invention.

The soft segment in the aliphatic polyester elastomer of the present invention is, in the case of a single polymer, a crystalline aliphatic polyester having a melting point of preferably 40-80°C, and there are exemplified a polycaprolactone and an adipic acid-based polyester, and the like. An average length in a block chain of the soft segment ranges in preferably 500-5,000, and more preferably 1,000-3,000.

Under conditions for cooling such as in usual injection molding, the aliphatic polyester elastomer of the present invention is characterized in that an appearance of elastomeric properties is caused by crystallization in the hard segment components alone and by non-crystallization in the soft segment components.

In a mixture of an aliphatic polyester forming the hard segment with an aliphatic polyester forming the soft segment, melting points in both are observed. On the other hand, in the case of a copolymerized aliphatic polyester obtained by copolymerization of monomer units by which there are formed respective aliphatic polyesters containing a hard segment and a soft segment, there is obtained a non-crystalline polyester in which melting points are not observed at all or an aliphatic polyester having a low melting point. Further, in the case of a block copolymer having an average length in a block chain of the soft segment exceeding 5,000, melting points in both are observed. Accordingly, it is shown that physical properties appeared become different by the difference in polymer structures even in the case of having the same structural units.

In the aliphatic polyester elastomer of the present invention, the weight ratio of the hard segment/the soft segment ranges in 55/45-95/5, and preferably 60/40-90/10. In the case that the ratio of the hard segment is less than 55 wt%, the hard segment components become apt to not crystallize and, contrarily, in the case of exceeding 95 wt%, physical properties are not different from an aliphatic polyester composed of the hard segment alone, unpreferably resulting in that elastomeric properties become poor.

Melting point (the hard segment components alone crystallize) in the aliphatic polyester elastomer itself of the present invention ranges in preferably 90-200°C, and more preferably 110-180°C. In a differential scanning calorimetric measurement (DSC), there is observed an absorption peak in a temperature range of 90-200°C. In the case that melting point is less than 90°C, heat resistance becomes insufficient and, contrarily, in the case of exceeding 200°C, there unpreferably lower ductility and impact resistance.

Number average molecular weight in the aliphatic polyester elastomer itself of the present invention ranges in 40,000-200,000, preferably 60,000-150,000. In the case of less than 40,000, ductility and impact resistance are unpreferably insufficient and, contrarily, in the case of exceeding 200,000, unpreferably, processability considerably lowers.

In the preparation of the aliphatic polyester elastomer of the present invention, both raw materials (respective aliphatic polyesters constructing the hard segment and the soft segment) are allowed to react in a melting state. Otherwise, an aliphatic polyester constructing the hard segment and a monomer constructing the soft segment are allowed to react in a condition in which there melts the aliphatic polyester constructing the hard segment. Reaction temperature may be a temperature in which there actually melt the respective aliphatic polyesters which are the hard segment and the soft segment, and a resin produced.
Usually, reaction is carried out in a temperature of 170-280°C. In the case that the reaction temperature is high, there must be given attention to thermal decomposition in the respective aliphatic polyesters which construct the hard segment and the soft segment, and an elastomer produced and, in the case that the reaction temperature is low, there must be given attention to crystallization and a decline in reaction rate.
Kneading time is 1-100 minutes or so, and it is decided by a mixing style, temperatures, and other conditions. Preferably, it is set up in 2-60 minutes. Further, in the above-described reaction, there are also preferably employed catalysts such as organic tin compounds which include tin tetraacetate, monobutyltin hydroxide, monobutyltin(2-ethylhexanoate), dibutyltin oxide, dibutyltin dilaurate, and tin dioctanoate.

Although the reaction according to the present invention can be carried out even under an atmosphere of oxygen and air, it is preferably carried out under an atmosphere of nitrogen from a viewpoint of preventing discoloration of an elastomer produced.

Specifically, there are enumerated nitrogen, helium, argon, and methane, and the like. Although pressure changes depending upon the reaction temperature, raw materials to be employed, and physical properties of additives such as thermal stabilizers and anti-oxidants, and catalysts which are optionally added, it ranges in preferably 0.001-10 Torr, and more preferably 0.01-2 Torr. In the case that distillation of reagents becomes problematic, a high pressure is maintained and, contrarily, in the case that there are removed residual low boiling-point-ingredients, it is preferably maintained at not more than 0.1 Torr.

In order to knead and allow to react the respective aliphatic polyesters which construct the hard segment and soft segment, other additives, and catalysts in a melting state, different methods may be employed, respectively. Further, the methods may be any one of batchwise, semi-continuous, and continuous ones. Still further, types of apparatuses are not particularly limited, and there can be employed an agitating-type reactor, a kneader-type reactor, and an extruder-type reactor, and the like. In addition, the above-described apparatuses and methods may be also employed repeatedly or in combination of two or more.

In the polyester elastomer obtained by the present invention, there can be applied a variety of molding methods such as extruding molding, injection molding, and blow molding, and it can be employed as a variety of molded articles such as hoses, tubes, films, sheets, packings, bottles, rolls, belts, gears, name plates, covers, hooks, switches, resin springs, fasteners, outside-mounting parts for cars, and vibration dumping materials, and the like, or coating agents.

### EXAMPLES OF THE SEVENTH ASPECT OF INVENTION

Hereinafter, although the present invention is specifically illustrated by Examples, the present invention is not limited by those.

### (Method for measurements and evaluations)

1. Number average molecular weight: It is the same as in the first aspect of the invention.
2. Average block length: It is the same as in the first aspect of the invention.
3. Melt viscosity: It is the same as in the first aspect of the invention.
4. Tensile strength, 50% Modulus (kg/cm²): JIS K7113
5. Fracture strength (kg/cm²): JIS K7113
6. Extension in fracture (%): JIS K7113
7. Melting point (°C): JIS K7121
8. Crystallization temperature (°C): JIS K7121
9. Hardness (Shore D): JIS K7215

### (Example 1)

A batchwise style reaction vessel having capacity of 20 liter equipped with an agitator, a tube for supplying nitrogen, and an equipment for reducing pressure was charged with 12 kg of a polylactic acid (Lacty 1012, Melting point of 190°C manufactured by Shimazdu Seisakusyo, Ltd.) which is an aliphatic polyester resin for forming a hard segment, 8 kg of caprolactone monomer, and 2 g of monobutyltin tris(2-ethylhexanoate) which is a catalyst for polymerization, followed by being melted by heating to 200°C while streaming nitrogen after sufficiently replacing at inside of the reaction vessel with nitrogen.
While maintaining the temperature at 200°C, agitation and mixing were carried out for 2 hours while streaming nitrogen at reduced pressure of 100 Torr. After mixed, the reduced pressure was released, followed by giving pressure of 2 atmospheres and by preparing pellets with a pelletizer while cooling strands through a water vessel. The pellets obtained were dried at 120°C for 5 hours under streaming nitrogen to obtain a polyester elastomer (1). Table 1-7 shows a number average molecular weight measured by a GPC, melt viscosity, a melting point, crystallization temperature, and results of tensile tests.

**Table 1-7**

| | Example 1 |
|---|---|
| Number average molecular weight | 72,000 |
| Average length in a block chain of (A) | 3,000 |
| Average length in a block chain of (B) | 1,500 |
| Melt viscosity (poise) | 6,300 |
| 50% Modulus (kg/cm²) | 90 |
| Fracture strength (kg/cm²) | 250 |
| Extension in fracture (%) | 530 |
| Melting point (°C) | 161 |
| Crystallization temperature (°C) | 124 |
| Hardness (Shore D) | 45 |

### POSSIBILITY OF UTILIZATION IN INDUSTRY BY THE SEVENTH ASPECT OF THE INVENTION

As described hereinabove, by the present invention, there can be obtained the aliphatic polyester elastomer having a low melting point composed of the hard segment and the soft segment which are mutually different aliphatic polyesters. The elastomer is an aliphatic polyester elastomer having molding processability, ductility, impact resistance, and hydrolysis resistance.

## Claims

1. A polyester elastomer composition which comprises 30-90% by weight of a polyester elastomer (A) and 70-10% by weight (total of both is 100% by weight) of an epoxy-modified polymer (B).

2. The polyester elastomer composition according to claim 1, **characterized in that** the polyester elastomer (A) contains a polybutylene terephthalate as a hard segment, and at least one kind selected from the group consisting of an aliphatic polyester, polyether, and a polycarbonate as a soft segment.

3. The polyester elastomer composition according to claim 1, **characterized in that** the polyester elastomer (A) contains a polyethylene terephthalate as a hard segment, and at least one kind selected from the group consisting of an aliphatic polyester, polyether, and a polycarbonate as a soft segment.

4. The polyester elastomer composition according to claim 1, **characterized in that** the polyester elastomer (A) contains a polyethylene naphthalate as a hard segment, and at least one kind selected from the group consisting of an aliphatic polyester, polyether, and a polycarbonate as a soft segment.

5. The polyester elastomer composition according to claim 2, **characterized in that** said aliphatic polyester which composes a soft segment is a polycaprolactone component.

6. The polyester elastomer composition according to claim 1, **characterized in that** said epoxy-modified polymer (B) is an epoxidized polymer in which a polymer having carbon-carbon double bonds or partially hydrogenated thereof is epoxidized by hydrogen peroxide or peracids.

7. The polyester elastomer composition according to claim 1, **characterized in that** said epoxy-modified polymer (B) is a glycidyl (meth)acrylate-modified or copolymerized polyethylene.

8. The polyester elastomer composition according to claim 1, wherein the epoxy-modified polymer (B) is an epoxidised styrene-butadiene-styrene block copolymer or epoxidised partially hydrogenated styrene-butadiene-styrene block copolymer.

9. The polyester elastomer composition according to claim 1, wherein the epoxy-modified polymer (B) is a glycidylmethacrylate-methylmethacrylate copolymer.

10. The polyester elastomer according to claim 1, wherein the epoxy-modified polymer (B) is an epoxidised polybutadiene.

11. A polyester elastomer **characterized in that** a hard segment is a polyester which has a melting point of 220-320° C mainly composed of a polyalkylene naphthalate, and a soft segment is an aliphatic polyester having an average block chain length of 1000-5000.

12. A polyester elastomer as set forth in claim 11, wherein said hard segment is a polyalkylene naphthalate, and said soft segment is a polylactone.

13. A process for the preparation of a polyester elastomer **characterized in that** a hard segment which is a polyester having a melting point of 220-320° C mainly composed of a polyalkylene naphthalate is coupled on a soft segment which is an aliphatic polyester.

14. A molded article which comprises containing an elastic polyester composed of 30-95 wt% of an aromatic polyester resin which is a hard segment primarily containing a polyethylene terephthalate or a polyethylene terenaphthalate and 5-70 wt% (total of both is 100% by weight) of at least one kind of a resin selected from the group consisting of an aliphatic polyester, polycarbonate, and polyether which are a soft segment.

15. A molded article as set forth in claim 14, which comprises containing an elastic polyester composed of 50-90 wt% of a hard segment, and 10-50 wt% of a polycaprolactone.

16. A molded article as set forth in claim 14 or 15, said molded article is a fiber, a film, a sheet, and a bottle.

17. A sheet-molded article obtained by vacuum molding and compression molding of the sheet as set forth in claim 16.

18. A aliphatic polyester elastomer **characterized by** an aliphatic polyester in which a hard segment and a soft segment which construct a polyester elastomer are different each other.

19. An aliphatic polyester elastomer as set forth in claim 18, **characterized in that** the weight ratio (the hard segment/the soft segment) of the hard segment with respect to the soft segment is 55/45-95/5, and a melting point ranges in 90-200° C.

20. An aliphatic polyester elastomer as set forth in claim 18 or 19, wherein said hard segment has an average length in a block chain ranging in 1000-10,000, said soft segment has an average length in a block chain ranging in 500-5,000, and a number average molecular weight ranges in 40,000-200,000.

21. An aliphatic polyester elastomer as set forth in claim 18, which has an endothermic peak between 90° C and 200° C measured by a differential scanning calorimetry (DSC).

22. A process for the preparation of the aliphatic polyester elastomer as set forth in claim 18, **characterized by** allowing to react an aliphatic polyester which constructs a hard segment with an aliphatic polyester which constructs a soft segment or a monomer which constructs the aliphatic polyester in a melting state.

23. A process for the preparation of an aliphatic polyester elastomer as set forth in claim 22, in which a melting point of the aliphatic polyester which constructs the hard segment ranges in 100-200° C and a melting point of the aliphatic polyester which constructs the soft segment is 40-80° C.
